# EUROPEAN PATENT APPLICATION

(11) **EP 4 797 601 A1**
(43) Date of publication of application: **26.08.2026**
(21) Application number: 23955816.6
(22) Date of filing: 20.10.2023
(51) Int. Cl.: H04L 5/00, H04W 72/04

(54) **INFORMATION TRANSMISSION METHOD AND APPARATUS**

(71) Applicant: Beijing Xiaomi Mobile Software Co., Ltd., Beijing 100085 (CN)
(72) Inventor: ZHAO, Qun, Beijing 100085 (CN); DUAN, Gaoming, Beijing 100085 (CN)
(74) Representative: Stöckeler, Ferdinand
(86) International application number: PCT/CN2023/125779
(87) International publication number: WO 2025/081495

(57) **Abstract**

Disclosed in embodiments of the present disclosure are an information transmission method and apparatus. The method is applied to an orthogonal time frequency space (OTFS) communication system. The method comprises: a network device sends, on a delay-Doppler (DD) domain, a physical downlink control channel (PDCCH) to a terminal on the basis of a spatial diversity method. In the technical solution, the PDCCH can be sent to the terminal on the basis of the spatial diversity method, thereby improving the transmission performance of the PDCCH.

## Description

### TECHNICAL FIELD

The disclosure relates to the field of communication technologies, and particularly to a method and an apparatus for transmitting information.

### BACKGROUND

In the related art, in order to eliminate an inter-symbol interference caused by a two-dimensional circular convolution characteristic of an orthogonal time-frequency space (OTFS) system, there needs to insert a guard interval between a reference signal and other channel or signal. The guard interval needed by the reference signal depends on a maximum delay and a maximum Doppler frequency shift of the channel. Reducing a delay and a sampling granularity of a Doppler frequency shift may improve a performance of the OTFS system, but may cause an increased overhead of a reference signal, thus further affecting a transmission performance of a physical downlink control channel (PDCCH).

### SUMMARY

Embodiments of the disclosure provide a method and an apparatus for transmitting information, a device, and a storage medium.

According to a first aspect of embodiments of the disclosure, there is provided a method for transmitting information, applied to an orthogonal time frequency space (OTFS) communication system, including: sending, by a network device, a physical downlink control channel (PDCCH) to a terminal based on spatial diversity in a delay-Doppler (DD) domain.

According to a second aspect of embodiments of the disclosure, there is provided method for transmitting information, applied to an orthogonal time -frequency space (OTFS) communication system, including: receiving, by a terminal, a physical downlink control channel (PDCCH) sent by a network device based on spatial diversity in a delay-Doppler (DD) domain.

According to a third aspect of embodiments of the disclosure, there is provided a network device, including: a transceiver module, configured to send a physical downlink control channel (PDCCH) to a terminal based on spatial diversity in a delay-Doppler (DD) domain.

According to a fourth aspect of embodiments of the disclosure, there is provided a terminal, including: a transceiver module, configured to receive a physical downlink control channel (PDCCH) sent by a network device based on spatial diversity in a delay-Doppler (DD) domain.

According to a fifth aspect of embodiments of the disclosure, there is provided a communication system including: a network device, configured to execute the alternative implementations of the above first aspect; and a terminal, configured to execute the alternative implementations of the above second aspect.

According to a sixth aspect of embodiments of the disclosure, there is provided a communication device, including: one or more processors. The one or more processors are configured to call instructions, to enable the communication device to execute the alternative implementations of the above first aspect and the above second aspect.

According to a seventh aspect of embodiments of the disclosure, there is provided a storage medium for storing instructions. When the instructions are run on a communication device, the communication device is caused to execute the alternative implementations of the above first aspect and the above second aspect.

### BRIEF DESCRIPTION OF THE DRAWINGS

**In** order to more clearly explain the technical solution in embodiments of this disclosure, introduction is made below to accompanying drawings required by description of embodiments. The following accompanying drawings are only some embodiments of the disclosure, but do not cause a detailed limitation on the protection scope of the disclosure.
FIG. 1 is a block diagram illustrating an architecture of a communication system according to embodiments of the disclosure.
FIG. 2A is a schematic diagram illustrating an exemplary interaction of a method for transmitting information according to embodiments of the disclosure.
FIG. 2B is a schematic diagram illustrating an exemplary interaction of a method for transmitting information according to embodiments of the disclosure.
FIG. 2C is a schematic diagram illustrating an exemplary interaction of a method for transmitting information according to embodiments of the disclosure.
FIG. 2D is a schematic diagram illustrating an exemplary interaction of a method for transmitting information according to embodiments of the disclosure.
FIG. 2E is a schematic diagram illustrating an exemplary interaction of a method for transmitting information according to embodiments of the disclosure.
FIG. 3A is a flow chart illustrating an exemplary of a method for transmitting information according to embodiments of the disclosure.
FIG. 3B is a flow chart illustrating an exemplary of a method for transmitting information according to embodiments of the disclosure.
FIG. 3C is a flow chart illustrating an exemplary of a method for transmitting information according to embodiments of the disclosure.
FIG. 3D is a flow chart illustrating an exemplary of a method for transmitting information according to embodiments of the disclosure.
FIG. 3E is a flow chart illustrating an exemplary of a method for transmitting information according to embodiments of the disclosure.
FIG. 3F is a flow chart illustrating an exemplary of a method for transmitting information according to embodiments of the disclosure.
FIG. 4A is a flow chart illustrating an exemplary of a method for transmitting information according to embodiments of the disclosure.
FIG. 4B is a flow chart illustrating an exemplary of a method for transmitting information according to embodiments of the disclosure.
FIG. 4C is a flow chart illustrating an exemplary of a method for transmitting information according to embodiments of the disclosure.
FIG. 4D is a flow chart illustrating an exemplary of a method for transmitting information according to embodiments of the disclosure.
FIG. 4E is a flow chart illustrating an exemplary of a method for transmitting information according to embodiments of the disclosure.
FIG. 5 is a schematic diagram illustrating an exemplary interaction of a method for transmitting information according to embodiments of the disclosure.
FIG. 6A is a flow chart illustrating a method for transmitting information according to embodiments of the disclosure.
FIG. 6B is a schematic diagram illustrating circularly mapping demodulation reference signal (DMRS) ports to control channel elements (CCEs) according to embodiments of the disclosure.
FIG. 6C is a schematic diagram illustrating dividing DMRS ports and CCEs in a CORESET according to embodiments of the disclosure.
FIG. 6D is a schematic diagram illustrating dividing DMRS ports outside a CORESET according to embodiments of the disclosure.
FIG. 6E is a flow chart illustrating a method for transmitting information according to embodiments of the disclosure.
FIG. 7A is a block diagram illustrating a network device according to embodiments of the disclosure.
FIG. 7B is a block diagram illustrating a terminal according to embodiments of the disclosure.
FIG. 8A is a block diagram illustrating a communication device according to embodiments of the disclosure.
FIG. 8B is a block diagram illustrating a chip according to embodiments of the disclosure.

### DETAILED DESCRIPTION

Embodiments of the disclosure provide a method and an apparatus for transmitting information.

In a first aspect, embodiments of the disclosure provide a method for transmitting information, applied to an orthogonal time frequency space (OTFS) communication system. The method includes: sending, by a network device, a physical downlink control channel (PDCCH) to a terminal based on spatial diversity in a delay-Doppler (DD) domain.

In the above embodiments, the network device in the OTFS communication system may send the PDCCH to the terminal based on the spatial diversity in the DD domain, to enhance a transmission performance of the PDCCH.

In combination with some embodiments of the first aspect, in some embodiments, sending, by the network device, the PDCCH to the terminal based on the spatial diversity in the DD domain includes: sending configuration information of a first control resource set (CORESET) of the DD domain to the terminal, in which the first CORESET includes N_{CCE} control channel elements (CCEs), where N_{CCE} is an integer.

In the above embodiments, the network device in the OTFS communication system may send the configuration information of the first CORESET of the DD domain to the terminal, and the first CORESET includes the N_{CCE} CCEs, such that each group of CCEs may share the same demodulation reference signal (DMRS) port, which reduces a number of required DMRS ports, thus reducing the transmission overhead and enhancing the transmission performance of the PDCCH.

In combination with some embodiments of the first aspect, in some embodiments, the configuration information of the first CORESET includes: mapping the N_{CCE} CCEs to N_{DMRS} DMRS ports, where N_{DMRS} is an integer lower than or equal to N_{CCE}.

In combination with some embodiments of the first aspect, in some embodiments, mapping the N_{CCE} CCEs to the N_{DMRS} DMRS ports includes: multiple CCEs to which one PDCCH candidate on the first CORESET is mapped being associated with different DMRS ports.

In combination with some embodiments of the first aspect, in some embodiments, sending, by the network device, the PDCCH to the terminal based on the spatial diversity in the DD domain includes: sending configuration information of a first CORESET of the DD domain to the terminal, in which the first CORESET includes N_{REG} resource element groups (REGs), where N_{REG} is an integer greater than or equal to 2.

In the above embodiments, the network device in the OTFS communication system may send the configuration information of the first CORESET of the DD domain to the terminal, and the first CORESET includes the N_{REG} REGs, such that each group of REGs shares the same DMRS port, which reduces the number of required DMRS ports, thus reducing the transmission overhead and enhancing the transmission performance of the PDCCH.

In combination with some embodiments of the first aspect, in some embodiments, the configuration information of the first CORESET includes: mapping the N_{REG} REGs to N_{DMRS} DMRS ports, where N_{CCE}<N_{REG}, and N_{DMRS} < N_{REG}.

In combination with some embodiments of the first aspect, alternatively, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In combination with some embodiments of the first aspect, in some embodiments, resource elements (REs) corresponding to the N_{DMRS} DMRS ports are REs in the first CORESET in the DD domain.

In combination with some embodiments of the first aspect, in some embodiments, REs corresponding to the N_{DMRS} DMRS ports are REs outside the first CORESET in the DD domain.

In combination with some embodiments of the first aspect, in some embodiments, the N_{DMRS} DMRS ports are dedicated to the first CORESET; or the N_{DMRS} DMRS ports are used for the first CORESET and other CORESETs; or the N_{DMRS} DMRS ports are used for the first CORESET and other channels and/or other signals.

In combination with some embodiments of the first aspect, in some embodiments, sending, by the network device, the PDCCH to the terminal based on the spatial diversity in the DD domain includes: sending the PDCCH to the terminal by employing a transmission diversity mode based on space time block code (STBC), in which encoding of the STBC is completed in the DD domain.

In the above embodiments, the network device in the OTFS communication system employs the transmission diversity mode based on the STBC to send the PDCCH to the terminal, thus enhancing the transmission performance of the PDCCH.

In combination with some embodiments of the first aspect, in some embodiments, REs of multiple DD domains for executing the STBC in the transmission diversity mode based on the STBC are multiple adjacent REs with the same Doppler frequency shift; or REs of multiple DD domains for executing the STBC in the transmission diversity mode based on the STBC are multiple adjacent RES with the same delay; or REs of multiple DD domains for executing the STBC in the transmission diversity mode based on the STBC are multiple non-adjacent REs.

In combination with some embodiments of the first aspect, in some embodiments, a number of antennas of the network device is N, and the method also includes: dividing each N REs into N/2 groups, in which STBC transmission is performed on two RES in each group respectively based on two common reference signal (CRS) ports.

In combination with some embodiments of the first aspect, in some embodiments, sending, by the network device, the PDCCH to the terminal based on the spatial diversity in the DD domain includes: sending the PDCCH to the terminal by employing a transmission diversity mode based on cyclic delay diversity (CDD), in which encoding of the CDD is completed in the DD domain.

In the above embodiments, the network device in the OTFS communication system employs the transmission diversity mode based on the CDD to send the PDCCH to the terminal, thus the spatial diversity may be used to enhance the transmission performance of the PDCCH.

In combination with some embodiments of the first aspect, in some embodiments, sending the PDCCH to the terminal by employing the transmission diversity mode based on the CDD includes: performing one-dimensional continuous numbering on REs occupied by the PDCCH based on the transmission diversity mode of the CDD; for an antenna among N antennas of the network device, multiplying, on the REs of the PDCCH and according to a sequence number of the REs, the antenna by CDD phase rotations corresponding to the REs respectively, where N is an integer greater than or equal to 2; and sending the PDCCH to the terminal via the N antennas.

In combination with some embodiments of the first aspect, in some embodiments, sending the PDCCH to the terminal by employing the transmission diversity mode based on the CDD includes: for a delay dimension in the DD domain, continuously numbering REs occupied by the PDCCH, and for an antenna among N antennas of the network device, multiplying, on the REs of the PDCCH and according to a sequence number of the REs, the antenna by first CDD phase rotations corresponding to the REs respectively, in which the first CDD phase rotation is a CDD phase rotation in the delay dimension, and N is an integer greater than or equal to 2; for a Doppler dimension in the DD domain, continuously numbering REs occupied by the PDCCH, and for an antenna, multiplying, on the REs of the PDCCH and according to the sequence numbers of the REs, the antenna by second CDD phase rotations corresponding to the REs respectively, in which the second CDD phase rotation is a CDD phase rotation in the Doppler dimension; and sending the PDCCH to the terminal via the N antennas.

In a second aspect, embodiments of the disclosure provide a method for transmitting information, applied to an OTFS communication system, including: receiving, by a terminal, a PDCCH sent by a network device based on spatial diversity in a DD domain.

In combination with some embodiments of the second aspect, in some embodiments, receiving, by the terminal, the PDCCH sent by the network device based on the spatial diversity in the DD domain includes: receiving configuration information of a first CORESET of the DD domain sent by the network device, in which the first CORESET comprises N_{CCE} CCEs, where N_{CCE} is an integer.

In combination with some embodiments of the second aspect, in some embodiments, the configuration information of the first CORESET includes: mapping the N_{CCE} CCEs to N_{DMRS} DMRS ports, where N_{DMRS} is an integer lower than or equal to N_{CCE}.

In combination with some embodiments of the second aspect, alternatively, mapping the N_{CCE} CCEs to the N_{DMRS} DMRS ports includes: multiple CCEs to which one PDCCH candidate on the first CORESET is mapped being associated with different DMRS ports.

In combination with some embodiments of the second aspect, in some embodiments, receiving, by the terminal, the PDCCH sent by the network device based on the spatial diversity in the DD domain includes: receiving configuration information of a first CORESET of the DD domain sent by the network device, in which the first CORESET includes N_{REG} REGs, where N_{REG} is an integer greater than or equal to 2.

In combination with some embodiments of the second aspect, in some embodiments, the configuration information of the first CORESET includes: mapping the N_{REG} REGs to N_{DMRS} DMRS ports, where N_{CCE}<N_{REG}, and N_{DMRS} < N_{REG}.

In combination with some embodiments of the second aspect, in some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In combination with some embodiments of the second aspect, in some embodiments, REs corresponding to the N_{DMRS} DMRS ports are REs in the first CORESET in the DD domain.

In combination with some embodiments of the second aspect, in some embodiments, REs corresponding to the N_{DMRS} DMRS ports are REs outside the first CORESET in the DD domain.

In combination with some embodiments of the second aspect, in some embodiments, the N_{DMRS} DMRS ports are dedicated to the first CORESET; or the N_{DMRS} DMRS ports are used for the first CORESET and other CORESETs; or the N_{DMRS} DMRS ports are used for the first CORESET and other channels and/or other signals.

In combination with some embodiments of the second aspect, in some embodiments, receiving, by the terminal, the PDCCH sent by the network device based on the spatial diversity in the DD domain includes: receiving the PDCCH from the network device by employing a transmission diversity mode based on STBC, in which encoding of the STBC is completed in the DD domain.

In combination with some embodiments of the second aspect, in an alternative implementation, REs of multiple DD domains for executing the STBC in the transmission diversity mode based on the STBC are multiple adjacent REs with the same Doppler frequency shift; or REs of multiple DD domains for executing the STBC in the transmission diversity mode based on the STBC are multiple adjacent RES with the same delay; or REs of multiple DD domains for executing the STBC in the transmission diversity mode based on the STBC are multiple non-adjacent REs.

In combination with some embodiments of the second aspect, in some embodiments, receiving, by the terminal, the PDCCH sent by the network device based on the spatial diversity in the DD domain includes: receiving the PDCCH from the network device by employing a transmission diversity mode based on CDD, in which encoding of the CDD is completed in the DD domain.

In a third aspect, embodiments of the disclosure provide a network device, including at least one of a transceiver module and a processing module. The above network device is configured to execute the alternative implementations of the first aspect.

In a fourth aspect, embodiments of the disclosure provide a terminal, including at least one of a transceiver module and a processing module. The terminal is configured to execute the alternative implementations of the second aspect.

In a fifth aspect, embodiments of the disclosure provide a communication system, including: a network device, configured to execute the alternative implementations of the above first aspect; and a terminal, configured to execute the alternative implementations of the above second aspect.

In a sixth aspect, embodiments of the disclosure provide a communication device including one or more processors. The one or more processors are configured to call instructions to cause the communication device to execute the alternative implementations of the above first aspect.

In a seventh aspect, embodiments of the disclosure provide a communication device including one or more processors. The one or more processors are configured to call instructions to cause the communication device to execute the alternative implementations of the above second aspect.

In an eighth aspect, embodiments of the disclosure provide a storage medium storing instructions. When the instructions are run in a communication device, the communication device is caused to execute the alternative implementations of the above first and second aspects.

In a ninth aspect, embodiments of the disclosure provide a program product. When the program product is executed by a communication device, the communication device is caused to execute the method described in the alternative implementations of the first aspect and the second aspect.

In a tenth aspect, embodiments of the disclosure provide a computer program. When the computer program is run on a computer, the computer is caused to execute the methods described in the alternative implementations of the first and second aspects.

In an eleventh aspect, embodiments of the disclosure provide a chip or chip system. The chip or chip system includes a processing circuit, configured to execute the method described in the alternative implementations of the first and second aspects described.

It may be understood that all the network device, the terminal, the communication system, the storage medium, the program product, the computer program, a chip, or a chip system are configured to execute the method provided by the embodiments of the disclosure. Therefore, achievable beneficial effects may refer to the beneficial effects in the corresponding methods, which is not be repeated here.

Embodiments of the disclosure provide a method and an apparatus for transmitting information. In some embodiments, terms such as a method for transmitting information and a communication method may be interchangeable, terms such as an apparatus for transmitting information and a communication device may be interchangeable, and terms such as a system for transmitting information and a communication system may be interchangeable.

Embodiments of the disclosure are not exhaustive and only serve as illustrations of some embodiments, but not as a detailed limitation on the protection scope of the disclosure. When there is no contradiction, each step in a certain embodiment may be realized as an independent embodiment, and each step may be arbitrarily combined. For example, a solution obtained by removing some steps from a certain embodiment may also be realized as an independent embodiment. A sequence of steps in a certain embodiment may be arbitrarily exchanged. In addition, alternative implementations in a certain embodiment may be arbitrarily combined. Furthermore, different embodiments may be arbitrarily combined. For example, some or all steps of different embodiments may be arbitrarily combined, and a certain embodiment may be arbitrarily combined with alternative implementations of other embodiments.

In various embodiments of the disclosure, unless otherwise specified and in case of logical inconsistency, terms and/or descriptions are consistent in all embodiments, which may be referred with each other. Technical features from different embodiments may be combined to form a new embodiment based on inherent logical relationships of different embodiments.

The terms used in embodiments of the disclosure are only for a purpose of describing specific embodiments and are not intended to limit the disclosure.

In embodiments of the disclosure, unless otherwise specified, an element expressed in a singular form, such as "a", "an", "the", "said", "above", "aforementioned", "this" etc. may mean "one and only one" or may mean "one or more", "at least one", etc. For example, when articles such as "a", "an", or "the" are used in translation, a noun following the article may be understood in the singular form or in the plural form.

In embodiments of the disclosure, "a plurality of" or "multiple" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the disclosure, depending on situations, may include at least one of the following solutions: executing A in some embodiments (executing A independently of B); executing B in some embodiments (executing B independently of A); selecting one of A or B for execution in some embodiments (selectively executing A or B); and executing A and B in some embodiments (executing both A and B). The similar principle applies when there are more parts such as A, B, C, etc.

In some embodiments, expressions such as "A or B", depending on situations, may include the following technical solutions: executing A in some embodiments (executing A independently of B); executing B in some embodiments (executing B independently of A); and selecting one of A or B for execution in some embodiments (selectively executing A or B). The similar principle applies when there are more parts such as A, B, C, etc.

The prefix word such as "first" and "second" in embodiments of the disclosure are used merely to distinguish different described objects and do not limit a position, a sequence, a priority, a quantity, or content of the described objects. For a statement regarding the described object, please refer to claims or the context of descriptions in embodiments, which should not constitute other restrictions due to the use of the prefix word. For example, if the described object is "field", ordinal numbers before the "field" in "first field" and "second field" do not limit a position or a sequence between fields. "First" and "second" do not limit whether "fields" modified by the "first" and "second" are in the same message, nor do an order of the "first field" and the "second field". For another example, if the described object is "level", ordinal numbers before the "level" in "first level" and "second level" do not limit a priority between levels. Furthermore, a quantity of described objects is not limited by the ordinal numbers, which may be one or more objects. Taking "first apparatus" as an example, there may be one or more "apparatus". In addition, different prefix words may modify the same or different objects. For example, if the described object is an "apparatus", "first apparatus" and "second apparatus" may be the same apparatus or different apparatuses, and types of the "first apparatus" and the "second apparatus" may be the same or different. For another example, if the described object is "information", "first information" and "second information" may be same information or different information, and content of the "first information" and the "second information" may be the same or different.

In some embodiments, "including A", "containing A", "configured to indicate A", or "carrying A" may be interpreted as directly carrying A or indirectly indicating A.

In some embodiments, terms such as "time/frequency" and "time-frequency domain" refer to time domain and/or frequency domain.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, apparatus and device may be interpreted as either physical or virtual. Names are not limited to those recorded in the embodiments. The terms such as "equipment", "device", "circuit", "network element", "node", "function", "unit", "section", "system", "network", "chip", "chip system", "entity", "subject", etc. may be used interchangeably.

In some embodiments, "network" may be interpreted as a device included in a network (such as, an access network device, a core network device, etc.).

In some embodiments, terms such as "access network device (AN device)", "radio access network device (RAN device)", "base station (BS)", "radio base station", "fixed station", "node" which may also be understood as in some embodiments, "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, terms such as "terminal", or "terminal device" may also be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

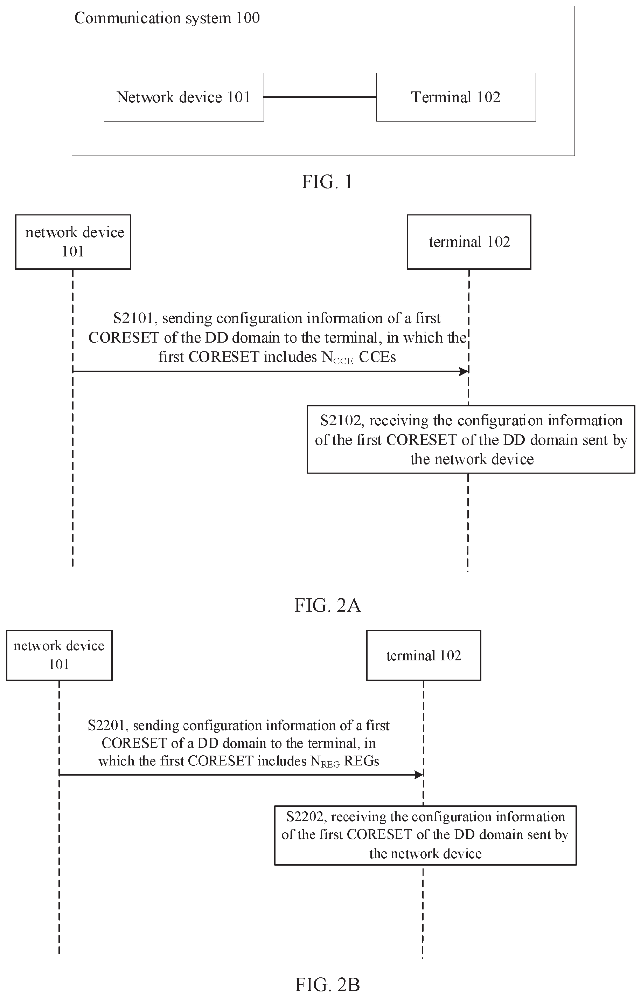

FIG. 1 is a schematic diagram illustrating an architecture of a communication system according to embodiments of the disclosure. The communication system may include, but is not limited to, a network device and a terminal. A number and form of devices illustrated in FIG. 1 are only for example and do not constitute a limitation to embodiments of the disclosure. In a practical application, two or more network devices and two or more terminals may be included. That the communication system 100 illustrated in FIG. 1 includes a network device 101 and a terminal 102 is taken as an example.

In some embodiments, the network device 101 and the terminal 102 are used to distinguish different description objects. The terminal in the application may be at least one of an entity for receiving or transmitting signals in the user side, such as a mobile phone, which may also be called a user equipment, a mobile station (MS), a mobile terminal (MT) or the like. The terminal may be a car with a communication function, a smart car, a mobile phone, a wearable device, a Pad, a computer with a wireless transceiver function, a virtual reality (VR) terminal, an augmented reality, AR) terminal, a wireless terminal in industrial control, a wireless terminal in self-driving, a wireless terminal in remote medical surgery, a wireless terminal in smart grid, a wireless terminal in transportation safety, a wireless terminal in a smart city, a wireless terminal in a smart home, and the like. The detailed technology and the detailed device form employed by the terminal is not limited in embodiments of the disclosure.

In some embodiments, the network device may be an access network device. In some embodiments, the access network device may be, such as, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the technical solution of the disclosure may be applied to an architecture of the Open RAN. In this case, an interface between access network devices or within the access network device in embodiments of the disclosure may become an internal interface of the Open RAN. Processes and information interaction with the internal interface may be realized via software or programs.

In some embodiments, the access network device may be combined by a central unit (CU) and distributed units (DUs). The CU may also be referred to as a control unit. The use of a CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

It may be understood that the communication system described in embodiments of the present disclosure is for more clearly explaining the technical solution of embodiments of the disclosure, and does not constitute a limitation on the technical solution provided in embodiments of the disclosure. Those skilled in the art may know that with the evolution of the system architecture and the emergence of a new business scenario, the technical solution provided in embodiments of the disclosure is also applicable to similar technical problems.

The following embodiments of the disclosure may be applied to the communication system 100 illustrated in FIG. 1, or to some entities, which are not limited herein. Entities in FIG. 1 are illustrative. The communication system may include all or some of the entities in FIG. 1, or may include other entities not illustrated in FIG. 1. The entities may be in any number and in any form. Each entity may be physical or virtual. Connection relationships between the entities are illustrative. The entities may be unconnected or may be connected. The connection may be in any manner, for example, directly connection or indirectly connection, or wired connection or wireless connection.

Embodiments of the disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of multiple systems (e.g., a combination of LTE or LTE-A with 5G) may be applied.

### (First) CORESET

CORESET is a set of physical resources for carrying the PDCCH. One CORESET may correspond to at least one search space. Configuration information for configuring the CORESET may include at least one of: an identity (ID) index of the CORESET, an initialization value of a DMRS scrambling sequence, a duration of the CORESET, a frequency domain resource bitmap of the CORESET, a mapping type of the CCE to the REG (such as, a non-interleaving mapping and an interleaving mapping), a size of an REG bundle, a cyclic shift value of an REG bundle interleaver, a Quasi co-location (QCL) relationship with the antenna port, or indication of whether a transmission configuration indicator (TCI) field exists in downlink control information (DCI).

### (Second) Candidate PDCCHs

The candidate PDCCH is a resource position where the PDCCH may appear. A candidate PDCCH may include 1, 2, 4, 8 or 16 CCEs, which is called an aggregation level of the PDCCH. When the UE detects the PDCCH, rate dematching and decoding are performed on the candidate PDCCH read, and radio network temporary identity (RNTI) descrambling and cyclic redundancy check (CRC) check are performed on the candidate PDCCH. The terminal may determine that the PDCCH is needed by itself after the CRC check is successful, thus further analyzing the content of the DCI.

In a cellular mobile network, orthogonal frequency division multiplexing (OFDM) is widely used. By adding a cyclic prefix (CP), influence of a multipath delay may be well solved. However, a performance of an OFDM system may still degrades in a time-varying channel. For a higher wireless frequency or a high moving velocity of the terminal, such as, a high speed train scenario, a Doppler frequency shift and a Doppler spread of a wireless channel are relatively large, which causes an inter-carrier interference (ICI) in the OFDM system. Although influence of a Doppler may be reduced by using a larger sub-carrier space (SCS), a length of the CP is also reduced proportionally under the premise of a certain overhead, thus causing a fact that the CP may not be enough to combat the influence of the multipath delay.

The OTFS is put forward to solve influence of a high Doppler. In the OTFS communication system, data is first mapped to a two-dimensional grid of the DD domain, and then transformed to a two-dimensional grid of a time-frequency (TF) domain by inverse symplectic finite Fourier transform (ISFFT). Next, a symbol in the TF domain may be transmitted by a multicarrier system. For example, the OFDM system may be employed for transmission. After a time-domain signal of the OTFS passes through the time-varying channel h(τ,ν), a receiving end first transforms a received signal into the TF domain (for example, by Wigner transform), and performs symplectic finite Fourier transform (SFFT) to restore the signal to the DD domain. Hereinafter, the grid points of the DD domain and the TF domain are collectively referred to as RE.

It should be noted that in the OTFS communication system, a data symbol on each RE in the DD domain is extended to all REs in the TF domain by the ISFFT transformation, that is, all the data symbols undergo the same channel h(τ,ν), i.e., equivalently undergo frequency selectivity and time diversity of the REs in the TF domain, and achieve full frequency diversity gains and full time diversity gains in the TF domain. Therefore, all the data symbols in the DD domain may be well approximated as undergoing the same time-invariant channel. In an ideal situation, a symbol received by a receiver in the DD domain is equal to a two-dimensional circular convolution of a symbol of a transmitter in the DD domain and the channel h(τ,ν) in the DD domain.

Due to the above properties of the OTFS system, the time-varying channel may be equivalent to the time-invariant channel in the DD domain, and a complete frequency diversity and a complete time diversity may be obtained. The performance of the OTFS system is far better than that of the OFDM system when the Doppler is relatively large. Moreover, one CCE in the OTFS system does not need to be distributed in the DD domain, but is mapped to several adjacent REs in the DD domain. A reference signal only needs to be sent at any position in the DD domain, and then a signal of the whole DD domain may be estimated. An RE occupied by a reference signal of one CCE or REG does not need to be adjacent to an RE occupied by the CCE or REG. Simultaneously, due to the two-dimensional circular convolution characteristic of the symbol in the DD domain, the symbol of any DD domain is spread to REs of multiple DD domains. In order to eliminate the inter-symbol interference caused by the above two-dimensional circular convolution characteristic, there needs to insert a guard interval between the reference signal and other channels/signals. The guard interval needed by the reference signal depends on a maximum time delay and a maximum Doppler frequency shift of the channel h(τ,ν). In order to improve the performance of the OTFS system, there needs to reduce the delay and the sampling granularity of the Doppler. Such case also causes an increase in the overhead of the reference signal.

FIG. 2A is a schematic diagram illustrating an exemplary interaction of a method for transmitting information according to embodiments of the disclosure. As illustrated in FIG. 2A, the method for transmitting the information in embodiments of the disclosure may be applied to the communication system 100. The method includes, but is not limited to, the following.

At step S2101, configuration information of a first CORESET of the DD domain is sent by a network device to the terminal, in which the first CORESET includes N_{CCE} CCEs.

In embodiments of the disclosure, N_{CCE} is an integer.

In some embodiments, the configuration information of the first CORESET includes: mapping the N_{CCE} CCEs to N_{DMRS} DMRS ports, where N_{DMRS} is an integer lower than or equal to N_{CCE}.

For example, the N_{CCE} CCEs on the first CORESET is grouped by the network device, and each group of CCEs is mapped to one of the N_{DMRS} DMRS ports, such that each group of CCEs shares a DMRS port, and corresponding configuration information of the first CORESET is sent to the terminal based on the mapping relationship.

As an example, it is assumed that an index k of the CCE is 0, 1, ..., N_{CCE} - 1, and an index p of the DMRS port is 0, 1, ..., N_{DMRS} - 1. Mapping the index k of the CCE to the index p of the DMRS port may be p = mod(k, N_{DMRS}), where mod () is a modulo function.

In some embodiments, mapping the N_{CCE} CCEs to the N_{DMRS} DMRS ports includes: multiple CCEs to which one PDCCH candidate on the first CORESET is mapped being associated with different DMRS ports.

In some embodiments, different precoding may be employed respectively to associate the multiple CCEs to which the PDCCH candidate is mapped with different DMRS ports, to improve the effect of the spatial diversity.

It should be noted that the PDCCH is used to schedule uplink and downlink data transmission of the UE. Based on a channel state of the UE, a number of REs that the PDCCH needs to map in a DD domain is variable under the condition of satisfying a certain transmission performance of the PDCCH. Therefore, the CCE still needs to be introduced in the OTFS system.

For example, mapping of the CCEs to the DMRS ports is defined, such that adjacent CCEs are mapped to different DMRS ports. In a case that one PDCCH on the first CORESET includes multiple consecutive CCEs, the multiple consecutive CCEs included in the PDCCH may be associated with different DMRS ports respectively.

In some embodiments, the REs corresponding to the N_{DMRS} DMRS ports are the REs in the first CORESET in the DD domain.

For example, the REs of the first CORESET in the DD domain may be divided into two parts. One part is used to transmit the above N_{DMRS} DMRS ports, and the other part is divided to the above N_{CCE} CCEs.

In some embodiments, REs corresponding to the N_{DMRS} DMRS ports are REs outside the first CORESET in the DD domain.

For example, all the REs of the first CORESET in the DD domain may be divided into the N_{CCE} CCEs. The N_{DMRS} DMRS ports associated with the N_{CCE} CCEs may occupy REs of other DD domain.

In some embodiments, the above N_{DMRS} DMRS ports are dedicated to the first CORESET.

In some embodiments, the above N_{DMRS} DMRS ports are used for the first CORESET and other CORESETs.

For example, the above N_{DMRS} DMRS ports may be shared by the first CORESET and other CORESETs.

In some embodiments, the above N_{DMRS} DMRS ports are used for the first CORESET and other signals.

For example, the above N_{DMRS} DMRS ports may be shared by the first CORESET and other signals.

In some embodiments, the above N_{DMRS} DMRS ports are used for the first CORESET and other channels.

For example, the above N_{DMRS} DMRS ports may be shared by the first CORESET and other channels.

In some embodiments, the above N_{DMRS} DMRS ports are used for the first CORESET, other channels and other signals.

For example, the above N_{DMRS} DMRS ports are shared by the first CORESET, other channels and other signals.

At step S2102, the terminal receives the configuration information of the first CORESET of the DD domain sent by the network device.

In some embodiments, the configuration information of the above first CORESET includes: mapping the N_{CCE} CCEs to N_{DMRS} DMRS ports, where N_{DMRS} is an integer lower than or equal to N_{CCE}.

In some embodiments, mapping the N_{CCE} CCEs to the N_{DMRS} DMRS ports includes: the multiple CCEs to which one PDCCH candidate on the first CORESET is mapped being associated with different DMRS ports.

For example, taking the CCEs mapped by one PDCCH candidate on the first CORESET being CCE0, CCE1 and CCE2 as an example, the CCE0 may associate DMRS port 0, the CCE1 may associate DMRS port 2, and the CCE2 may associate DMRS port 2.

For example, the terminal receives the configuration information of the first CORESET of the DD domain sent by the network device. The configuration information of the first CORESET includes: mapping the N_{CCE} CCEs to the N_{DMRS} DMRS ports. The N_{CCE} CCEs are the CCEs included in one PDCCH on the first CORESET, thus the terminal may determine the PDCCH based on the CCEs.

In some embodiments, the REs corresponding to the N_{DMRS} DMRS ports are the REs in the first CORESET in the above DD domain.

For example, the REs of the first CORESET in the DD domain may be divided into two parts. One part is used to transmit the above N_{DMRS} DMRS ports, and the other part is divided to the above N_{CCE} CCEs.

In some embodiments, the REs corresponding to the N_{DMRS} DMRS ports are the REs outside the first CORESET in the DD domain.

For example, all the REs of the first CORESET in the DD domain may be divided into the N_{CCE} CCEs. The N_{DMRS} DMRS ports associated with the N_{CCE} CCEs may occupy the REs of other DD domain.

In some embodiments, the above N_{DMRS} DMRS ports are dedicated to the first CORESET.

In some embodiments, the above N_{DMRS} DMRS ports are used for the first CORESET and other CORESETs.

For example, the above N_{DMRS} DMRS ports may be shared by the first CORESET and other CORESETs.

In some embodiments, the above N_{DMRS} DMRS ports are used for the first CORESET and other signals.

For example, the above N_{DMRS} DMRS ports may be shared by the first CORESET and other signals.

In some embodiments, the above N_{DMRS} DMRS ports are used for the first CORESET and other channels.

For example, the above N_{DMRS} DMRS ports may be shared by the first CORESET and other channels.

In some embodiments, the above N_{DMRS} DMRS ports are used for the first CORESET, other channels and other signals.

For example, the above N_{DMRS} DMRS ports are shared by the first CORESET, other channels and other signals.

The method related to the embodiments of the present may include at least one of step S2101 and step S2102. For example, step S2101 may be implemented as an independent embodiment, and step S2102 may be implemented as an independent embodiment, but it is not limited thereto.

In some embodiments, step S2101 is alternative, which may be omitted or replaced in different embodiments.

In some embodiments, step S2102 is alternative, which may be omitted or replaced in different embodiments.

In some embodiments, please refer to other alternative implementations described before or after the description corresponding to FIG. 2A.

FIG. 2B is a schematic diagram illustrating an exemplary interaction of a method for transmitting information according to embodiments of the disclosure. As illustrated in FIG. 2B, the method for transmitting the information related in embodiments of the disclosure may be applied to the communication system 100. The above method may include, but not limited to, the following.

At step S2201, the network device sends configuration information of a first CORESET of a DD domain to the terminal, in which the first CORESET includes N_{REG} REGs.

In some embodiments of the disclosure, N_{REG} is an integer greater than or equal to 2.

It may be understood that REs of one CORESET may be divided into multiple CCEs, REs of one CCE may further be equally divided into multiple REGs. In some embodiments, the configuration information of the first CORESET includes: mapping the N_{REG} REGs to N_{DMRS} DMRS ports, where N_{CCE}<N_{REG}, and N_{DMRS} < N_{REG}. The N_{CCE} is the number of CCEs included in the first CORESET.

In some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

For example, taking that one PDCCH candidate on the first CORESET is mapped to CCE0, the CCE0 includes REGO, REG1 and REG2 as an example, the REG0 may be associated with DMRS port 0, the REG1 may be associated with DMRS port 2, and the REG2 may be associated with the DMRS port 2.

For example, one PDCCH candidate on the first CORESET is mapped to CCE0 and CCE1 is taken as an example. REs of the CCE0 are equally divided into corresponding REGO, REG1 and REG2. The REG0 corresponding to the CCE0 may be associated with DMRS port 0, the REG1 corresponding to the CCE0 may be associated with DMRS port 2, and the REG2 corresponding to the CCE0 may be associated with DMRS port 2. REs of the CCE1 are equally divided into corresponding REGO, REG1 and REG2, and the REG0 corresponding to the CCE1 may be associated with the DMRS port 0, the REG1 corresponding to the CCE1 may be associated with the DMRS port 2, and the REG2 corresponding to the CCE1 may be associated with the DMRS port 2.

For example, the multiple REs of the first CORESET may be divided into the multiple CCEs, such that one PDCCH candidate on the first CORESET is mapped to one or more of the multiple CCEs. Moreover, the REs in each CCE may be further divided (for example, equally divided) into multiple REGs, and the multiple REGs corresponding to each CCE may be associated with different DMRS ports respectively.

In some embodiments, the REs corresponding to the N_{DMRS} DMRS ports are the REs in the first CORESET in the DD domain.

For example, the REs of the first CORESET in the DD domain may be divided into two parts. One part is used to transmit the above N_{DMRS} DMRS ports, and the other part is divided to the above N_{REG} REGs.

In some embodiments, REs corresponding to the N_{DMRS} DMRS ports are REs outside the first CORESET in the DD domain.

For example, all the REs of the first CORESET in the DD domain may be divided into the N_{REG} REGs. The N_{DMRS} DMRS ports associated with the N_{REG} REGs may occupy the REs of other DD domain.

In some embodiments, the N_{DMRS} DMRS ports are dedicated to the first CORESET.

For example, the N_{DMRS} DMRS ports are dedicated to the first CORESET.

In some embodiments, the N_{DMRS} DMRS ports are used for the first CORESET and other CORESETs.

For example, the above N_{DMRS} DMRS ports may be shared by the first CORESET and other CORESETs.

In some embodiments, the N_{DMRS} DMRS ports are used for the first CORESET and other signals.

For example, the above N_{DMRS} DMRS ports may be shared by the first CORESET and other signals.

In some embodiments, the N_{DMRS} DMRS ports are used for the first CORESET and other channels.

For example, the above N_{DMRS} DMRS ports may be shared by the first CORESET and other channels.

In some embodiments, the N_{DMRS} DMRS ports are used for the first CORESET, other channels and other signals.

For example, the above N_{DMRS} DMRS ports are shared by the first CORESET, other channels and other signals.

At step 2202, the terminal receives the configuration information of the first CORESET of the DD domain sent by the network device.

In some embodiments of the disclosure, the first CORESET includes the N_{REG} REGs, where N_{REG} is an integer greater than or equal to 2.

In some embodiments, the configuration information of the first CORESET includes: mapping the N_{REG} REGs to the N_{DMRS} DMRS ports, where N_{CCE}<N_{REG}, and N_{DMRS} < N_{REG}. The N_{CCE} is the number of CCEs included in the first CORESET.

In some embodiments, mapping the N_{REG} REGs to the N_{DMRS} DMRS ports includes: mapping one PDCCH candidate on the first CORESET to the one or more CCEs, in which the multiple REGs to which one CCE is mapped are associated with different DMRS ports.

In some embodiments, the REs corresponding to the N_{DMRS} DMRS ports are the REs in the first CORESET in the DD domain.

For example, the REs of the first CORESET in the DD domain may be divided into two parts. One part is used to transmit the above N_{DMRS} DMRS ports, and the other part is divided to the above N_{REG} REGs.

In some embodiments, REs corresponding to the N_{DMRS} DMRS ports are REs outside the first CORESET in the DD domain.

For example, all the REs of the first CORESET in the DD domain may be divided into the N_{REG} REGs. The N_{DMRS} DMRS ports associated with the N_{REG} REGs may occupy the REs of other DD domain.

In some embodiments, the N_{DMRS} DMRS ports are used for the first CORESET and other signals.

For example, the N_{DMRS} DMRS ports may be shared by the first CORESET and other signals.

In some embodiments, the N_{DMRS} DMRS ports are used for the first CORESET and other channels.

For example, the N_{DMRS} DMRS ports may be shared by the first CORESET and other channels.

In some embodiments, the N_{DMRS} DMRS ports are used for the first CORESET, other channels and other signals.

For example, the N_{DMRS} DMRS ports are shared by the first CORESET, other channels and other signals.

The method related to the embodiments of the disclosure may include at least one of step S2201 and step S2202. For example, step S2201 may be implemented as an independent embodiment, and step S2202 may be implemented as an independent embodiment, but is not limited thereto.

In some embodiments, step S2201 is alternative, which may be omitted or replaced in different embodiments.

In some embodiments, step S2202 is alternative, which may be omitted or replaced in different embodiments.

In some embodiments, please refer to other alternative implementations described before or after the description corresponding to FIG. 2B.

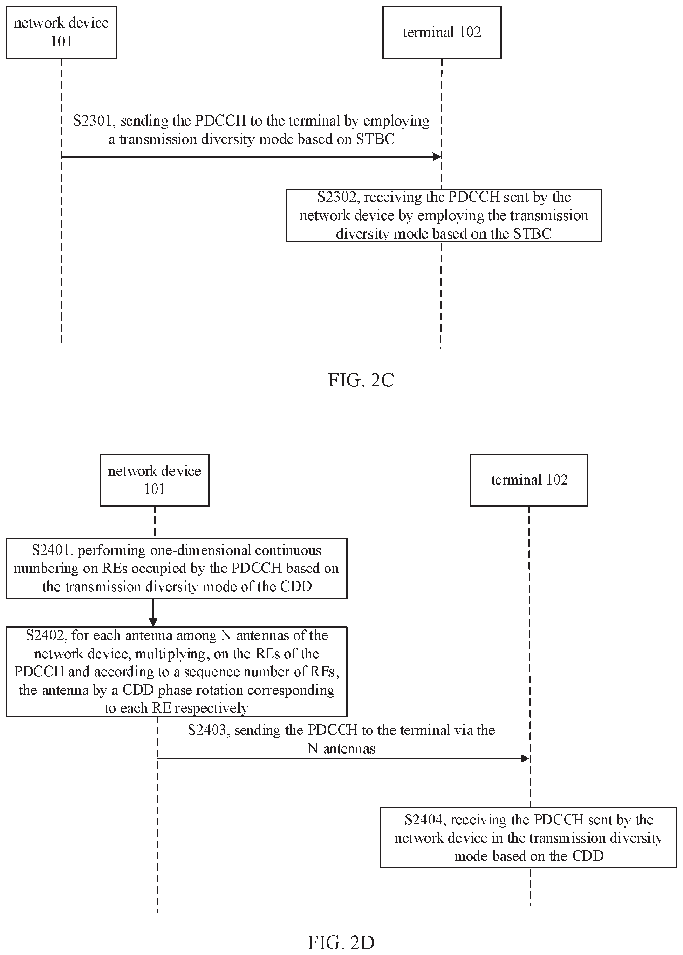

FIG. 2C is a schematic diagram illustrating a third exemplary interaction of a method for transmitting information according to embodiments of the disclosure. As illustrated in FIG. 2C, the method for transmitting the information related in embodiments of the disclosure may be applied to the communication system 100. The method may include, but is not limited to, the following.

At step S2301, the network device sends the PDCCH to the terminal by employing a transmission diversity mode based on STBC.

Encoding of the STBC is completed in the DD domain.

For example, the network device performs the encoding of the STBC in the DD domain, to employ the transmission diversity mode based on the STBC to send the PDCCH to the terminal.

In some embodiments, REs of multiple DD domains for executing the STBC in the above transmission diversity mode based on the STBC are multiple adjacent REs with the same Doppler frequency shift.

For example, the network device executes the STBC based on two adjacent REs with the same Doppler frequency shift in the multiple DD domains, and sends the PDCCH to the terminal in the transmission diversity mode based on the STBC.

In some embodiments, REs of multiple DD domains for executing the STBC in the transmission diversity mode based on the STBC are multiple adjacent REs with the same delay.

For example, the network device executes the STBC based on two adjacent RES with the same Doppler frequency shift in the multiple DD domains, and sends the PDCCH to the terminal in the transmission diversity mode based on the STBC.

In some embodiments, REs of multiple DD domains for executing the STBC in the transmission diversity mode based on the STBC are multiple non-adjacent REs.

For example, the network device executes the STBC based on two non-adjacent REs in the DD domains, and sends the PDCCH to the terminal in the transmission diversity mode based on the STBC.

In some embodiments, a number of antennas of the network device is N, and the method also includes: dividing each N REs into N/2 groups, in which STBC transmission is performed on two REs in each group respectively based on two CRS ports.

For example, taking that the number of antennas of the network device is 4 as an example, every 4 REs are divided into 2 groups, and 2 REs in each group perform the STBC transmission based on 2 CRS ports respectively.

In some embodiments, terms "antenna" and "antenna port" may be used interchangeably.

At step S2302, the terminal receives the PDCCH sent by the network device by employing the transmission diversity mode based on the STBC.

In embodiments of the disclosure, the encoding of the STBC is completed in the DD domain.

In some embodiments, the REs of the multiple DD domains for executing the STBC in the transmission diversity mode based on the STBC are the multiple adjacent REs with the same Doppler frequency shift.

As an example, taking that there are two REs in the multiple DD domains for executing the STBC as an example, REs of the multiple DD domain for executing the STBC in the transmission diversity mode based on the STBC by the network device are two adjacent REs with the same Doppler frequency shift in the multiple DD domains.

In some embodiments, the REs of the multiple DD domains for executing the STBC in the transmission diversity mode based on the STBC are the multiple adjacent REs with the same delay.

As an example, taking that there are two REs in the multiple DD domains for executing the STBC as an example, REs of the multiple DD domain for executing the STBC in the transmission diversity mode based on the STBC by the network device are two adjacent REs with the same delay in the multiple DD domains.

In some embodiments, the REs of the multiple DD domains for executing the STBC in the transmission diversity mode based on the STBC are the multiple non-adjacent REs.

For example, in the transmission diversity mode based on the STBC, the REs in two DD domains used by the network device to execute the STBC are two non-adjacent REs.

The method related to the embodiments of the disclosure may includes at least one of step S2301 and step S2302. For example, step S2301 may be implemented as an independent embodiment, and step S2302 may be implemented as an independent embodiment, but is not limited thereto.

In some embodiments, step S2301 is alternative, which may be omitted or replaced in different embodiments.

In some embodiments, step S2302 is alternative, which may be omitted or replaced in different embodiments.

In some embodiments, please refer to other alternative implementations described before or after the description corresponding to FIG. 2C.

FIG. 2D is a schematic diagram illustrating an exemplary interaction of a method for transmitting information according to embodiments of the disclosure. As illustrated in FIG. 2D, the method for transmitting the information related in embodiments of the disclosure may be applied to the communication system 100. The above method includes, but is not limited to, the following.

At step S2401, the network device performs one-dimensional continuous numbering on REs occupied by the PDCCH based on the transmission diversity mode of the CDD.

For example, based on the transmission diversity mode of the CDD, the network device continuously numbers the REs occupied by the PDCCH in one dimension in a delay dimension as RE 0, RE 1, RE 2 ...RE N-1.

For example, based on the transmission diversity mode of the CDD, the network device continuously numbers the REs occupied by the PDCCH in a Doppler dimension as RE 0, RE 1, RE2 ... REN-1.

At step S2402, for each antenna among N antennas of the network device, the network device multiplies, on the REs of the PDCCH and according to a sequence number of REs, the antenna by a CDD phase rotation corresponding to each RE respectively.

In embodiments of the disclosure, N is an integer greater than or equal to 2.

For example, take that the network device performs consecutive numbers on REs occupied by the PDCCH as RE 0, RE 1, RE 2, ...RE N-1 as an example. For each antenna, each of the N REs is multiplied by the CDD phase rotation corresponding each RE in turn. The phase rotations of different antennas may be different.

In some embodiments, for each antenna among N antennas of the network device, multiplying, on the REs of the PDCCH and according to the sequence number of REs, the antenna by the CDD phase rotation corresponding to each RE respectively includes: for a delay dimension in the DD domain, numbering continuously REs occupied by the PDCCH, and multiplying, on a group of REs with the same Doppler frequency shift of the PDCCH and according to a sequence number of REs, each of N antennas by a first CDD phase rotation corresponding to each RE respectively, in which the first CDD phase rotation is a CDD phase rotation in the delay dimension, and is applied to the REs with the same delay of the PDCCH repeatedly; or for a Doppler dimension in the DD domain, multiplying, on a group of REs with the same delay of the PDCCH and according to the sequence number of the REs, the antenna by a second CDD phase rotation corresponding to each RE respectively, in which the second CDD phase rotation is a CDD phase rotation in the Doppler dimension, and is applied to the REs with the Doppler of the PDCCH repeatedly; or numbering the REs of the PDCCH in the DD domain by a delay-dimension-first order, and multiplying, on the REs of the PDCCH and according to sequence number of the REs, each antenna by a third CDD phase rotation corresponding each RE respectively; or numbering the REs of the PDCCH in the DD by a Doppler-dimension-first order, and multiplying, on the REs of the PDCCH and according to the sequence number of the REs, each antenna by a fourth CDD phase rotation corresponding each RE respectively;

For example, for the delay dimension in the DD domain, the network device multiplies, on the group of REs with the same Doppler frequency shift of the PDCCH and according to the sequence number of REs, each antenna by the first CDD phase rotations corresponding to respective REs in turn, in which the first CDD phase rotation is the CDD phase rotation in the delay dimension, and is applied to the REs with the same delay of the PDCCH repeatedly.

For example, the network device multiplies, on the group of REs with the same delay of the PDCCH and according to the sequence number of the REs, the antenna by second CDD phase rotations corresponding to respective REs in turn, in which the second CDD phase rotation is the CDD phase rotation in the Doppler dimension, and is applied to the REs with the Doppler of the PDCCH repeatedly.

It should be noted that in embodiments of the disclosure, the CDD phase rotation corresponding to a sequence number of each RE may be periodically changed.

It should be noted that, in embodiments of the disclosure, the above CDD phase rotation may adjust a phase only in the delay dimension or only in the Doppler dimension.

At step S2403, the network device sends the PDCCH to the terminal via the N antennas.

At step S2404, the terminal receives the PDCCH sent by the network device in the transmission diversity mode based on the CDD.

In embodiments of the disclosure, encoding of the CDD is completed on the DD domain.

The method related in the embodiments of the disclosure may include at least one of step S2401 to step S2404. For example, step S2401+ step S2403+ step S2404 may be implemented as an independent embodiment. For example, step S2402+ step S2403+ step S2404 may be implemented as an independent embodiment. For example, step S2403+ step S2404 may be implemented as an independent embodiment, but is not limited thereto.

In some embodiments, step S2402, step S2403 and step S2404 are alternative, which may be omitted or replaced in different embodiments.

In some embodiments, step S2401, step S2403 and step S2404 are alternative, which may be omitted or replaced in different embodiments.

In some embodiments, step S2401, step S2402 and step S2404 are alternative, which may be omitted or replaced in different embodiments.

In some embodiments, step S2401, step S2402 and step S2403 are alternative, and which may be omitted or replaced in different embodiments.

In some embodiments, please refer to other alternative implementations described before or after the description corresponding to FIG. 2D.

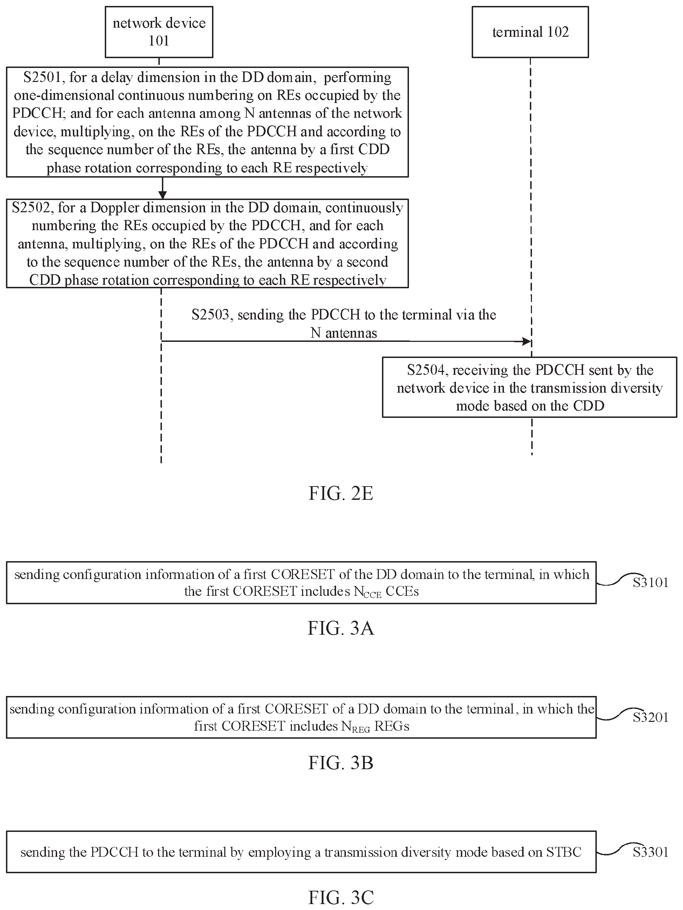

FIG. 2E is a schematic diagram illustrating an exemplary interaction of a method for transmitting information according to embodiments of the disclosure. As illustrated in FIG. 2E, the method for transmitting the information related in embodiments of the disclosure may be applied to the communication system 100. The above method includes, but is not limited to, the following.

At step S2501, for a delay dimension in the DD domain, the network device performs one-dimensional continuous numbering on REs occupied by the PDCCH; and for each antenna among N antennas of the network device, multiplies, on the REs of the PDCCH and according to the sequence number of the REs, the antenna by a first CDD phase rotation corresponding to each RE respectively.

In some embodiments of the disclosure, the first CDD phase rotation is applied to the REs with the same delay of the PDCCH repeatedly.

In some embodiments of the disclosure, the first CDD phase rotation is the CDD phase rotation in the delay dimension, and N is an integer greater than or equal to 2.

For example, for the delay dimension in the DD domain, the network device continuously numbers the REs occupied by the PDCCH, and multiplies, on the REs of the PDCCH and according to a sequence number of REs, each of N antennas of the network device by a first CDD phase rotation corresponding to each RE respectively.

At step S2502, for a Doppler dimension in the DD domain, the network device continuously numbers the REs occupied by the PDCCH, and for each antenna, multiplies, on the REs of the PDCCH and according to the sequence number of the REs, the antenna by a second CDD phase rotation corresponding to each RE respectively.

In embodiments of the disclosure, the second CDD phase rotation is applied to the REs with the same Doppler of the PDCCH repeatedly.

In some embodiments of the disclosure, the second CDD phase rotation is the CDD phase rotation in the delay dimension.

In some embodiments, step S2501 and step S2502 may be performed in a reverse order or simultaneously. For example, the network device continuously numbers the REs occupied by the PDCCH for the Doppler dimension in the DD domain, and multiplies each of the N antennas of the network device by the corresponding second CDD phase rotation according to the sequence number of the REs.

At step S2503, the network device sends the PDCCH to the terminal via the N antennas.

For example, the network device uses the N antennas processed at steps S2501 and S2502 to send the PDCCH to the terminal.

At step S2504, the terminal receives the PDCCH sent by the network device in the transmission diversity mode based on the CDD.

In embodiments of the present disclosure, encoding of the CDD is completed on the DD domain.

The method related in the embodiments of the disclosure may include at least one of steps S2501 to S2504. For example, step S2501+ step S2503+ step S2504 may be implemented as an independent embodiment. For example, step S2502+ step S2503+ step S2504 may be implemented as an independent embodiment. For example, step S2503+ step S2504 may be implemented as an independent embodiment, but is not limited thereto.

In some embodiments, step S2502, step S2503 and step S2504 are alternative, which may be omitted or replaced in different embodiments.

In some embodiments, step S2501, step S2503 and step S2504 are alternative, which may be omitted or replaced in different embodiments.

In some embodiments, step S2501, step S2502 and step S2504 are alternative, which may be omitted or replaced in different embodiments.

In some embodiments, step S2501, step S2502 and step S2503 are alternative, which may be omitted or replaced in different embodiments.

In some embodiments, please refer to other alternative implementations described before or after the description corresponding to FIG. 2E.

FIG. 3A is a flow chart illustrating an exemplary of a method for transmitting information according to embodiments of the disclosure. As illustrated in FIG. 3A, the method for transmitting the information in embodiments of the disclosure may be applied to the communication system 100. The method includes, but is not limited to, the following.

At step S3101, configuration information of a first CORESET of the DD domain is sent to the terminal.

For alternative implementations of step S3101, please refer to the alternative implementations of step S2101 in FIG. 2A and other related parts in the embodiments related to FIG. 2A, which is not described here.

In embodiments of the disclosure, the first CORESET includes N_{CCE} CCEs, where N_{CCE} is an integer.

In some embodiments, the configuration information of the first CORESET includes: mapping the N_{CCE} CCEs to N_{DMRS} DMRS ports, where N_{DMRS} is an integer lower than or equal to N_{CCE}.

In some embodiments, mapping the N_{CCE} CCEs to the N_{DMRS} DMRS ports includes: multiple CCEs to which one PDCCH candidate on the first CORESET is mapped being associated with different DMRS ports.

In some embodiments, the REs corresponding to the N_{DMRS} DMRS ports are the REs in the first CORESET in the DD domain.

In some embodiments, REs corresponding to the N_{DMRS} DMRS ports are REs outside the first CORESET in the DD domain.

In some embodiments, the above N_{DMRS} DMRS ports are dedicated to the first CORESET.

In some embodiments, the above N_{DMRS} DMRS ports are used for the first CORESET and other CORESETs; or the above N_{DMRS} DMRS ports are used for the first CORESET and other channels and/or other signals.

FIG. 3B is a flow chart illustrating an exemplary of a method for transmitting information according to embodiments of the disclosure. As illustrated in FIG. 3B, the method for transmitting the information related in embodiments of the disclosure may be applied to the communication system 100. The above method may include the following.

At step S3201, configuration information of a first CORESET of a DD domain is sent to the terminal, in which the first CORESET includes N_{REG} REGs.

In some embodiments of the disclosure, N_{REG} is an integer greater than or equal to 2.

For alternative implementations of step S3201, please refer to the alternative implementations of step S2201 in FIG. 2B and other related parts in the embodiments related to FIG. 2B, which is not described here.

In some embodiments, the configuration information of the first CORESET includes: mapping the N_{REG} REGs to N_{DMRS} DMRS ports, where N_{CCE}<N_{REG}, and N_{DMRS} < N_{REG}. The N_{CCE} is the number of CCEs included in the first CORESET.

In some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In some embodiments, the REs corresponding to the N_{DMRS} DMRS ports are the REs in the first CORESET in the DD domain.

In some embodiments, REs corresponding to the N_{DMRS} DMRS ports are REs outside the first CORESET in the DD domain.

In some embodiments, the N_{DMRS} DMRS ports are dedicated to the first CORESET.

In some embodiments, the N_{DMRS} DMRS ports are used for the first CORESET and other CORESETs.

In some embodiments, the N_{DMRS} DMRS ports are used for the first CORESET and other CORESETs.

In some embodiments, the N_{DMRS} DMRS ports are used for the first CORESET and other signals.

In some embodiments, the N_{DMRS} DMRS ports are used for the first CORESET and other channels.

In some embodiments, the N_{DMRS} DMRS ports are used for the first CORESET, other channels and other signals.

In embodiments of the disclosure, step S3201 may be combined with step S3101 in FIG. 3A.

FIG. 3C is a flow chart illustrating an exemplary of a method for transmitting information according to embodiments of the disclosure. As illustrated in FIG. 3C, the method for transmitting the information related in embodiments of the disclosure may be applied to the communication system 100. The method may include the following.

At step S3301, the PDCCH is sent to the terminal by employing a transmission diversity mode based on STBC.

Encoding of the STBC is completed in the DD domain.

For alternative implementations of step S3301, please refer to the alternative implementations of step S2301 in FIG. 2C and other related parts of the embodiments related in FIG. 2C, which is not described here again.

In some embodiments, REs of multiple DD domains for executing the STBC in the transmission diversity mode based on the STBC are multiple adjacent REs with the same Doppler frequency shift; or REs of multiple DD domains for executing the STBC in the transmission diversity mode based on the STBC are multiple adjacent REs with the same delay; or REs of multiple DD domains for executing the STBC in the transmission diversity mode based on the STBC are multiple non-adjacent REs.

In some embodiments, a number of antennas of the network device is N, and the method also includes: dividing each N REs into N/2 groups, in which STBC transmission is performed on two REs in each group respectively based on two CRS ports.

In embodiments of the disclosure, step S3301 may be combined with step S3101 in FIG. 3A, and step S3301 may be combined with step S3201 in FIG. 3B.

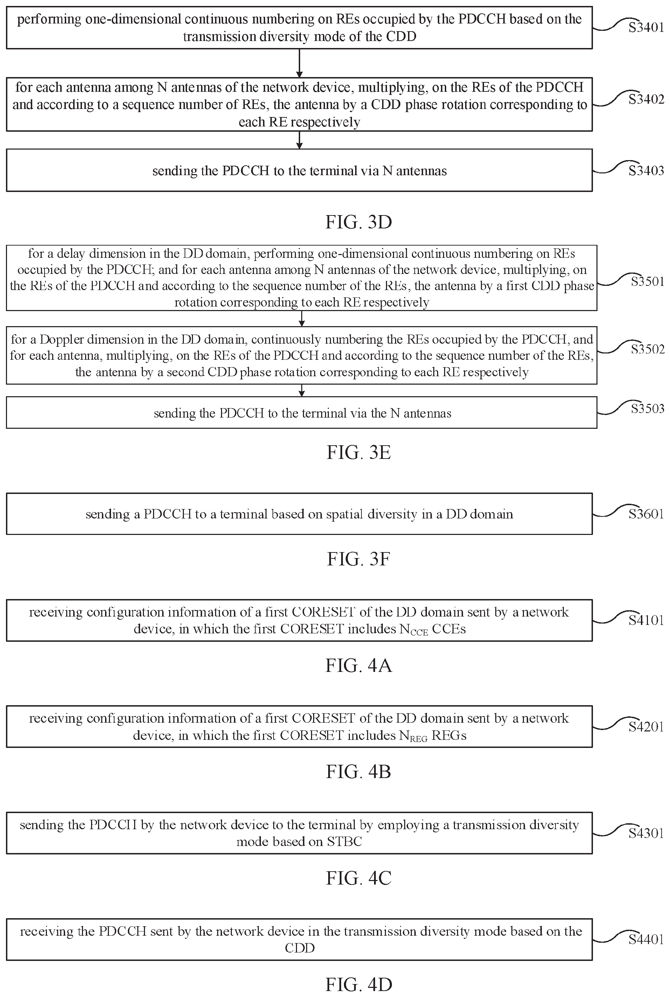

FIG. 3D is a flow chart illustrating an exemplary of a method for transmitting information according to embodiments of the disclosure. As illustrated in FIG. 3D, the method for transmitting the information related in embodiments of the disclosure may be applied to the communication system 100. The method may include the following.

At step S3401, one-dimensional continuous numbering is performed on REs occupied by the PDCCH based on the transmission diversity mode of the CDD.

As an example, the network device transmits PDCCH information based on the transmission diversity mode of the CDD, and numbers the REs occupied by the PDCCH continuously.

At step S3402, for each antenna among N antennas of the network device, on the REs of the PDCCH and according to a sequence number of REs, the antenna is multiplied by a CDD phase rotation corresponding to each RE respectively.

For alternative implementations of step S3402, please refer to the alternative implementations of step S2402 in FIG. 2D and other related parts of the embodiments involved in FIG. 2D, which is not repeated here.

At step S3403, the PDCCH is sent to the terminal via N antennas.

The method related in embodiments of the disclosure may include at least one of steps S3401 to S3403. For example, step S3401+ step S3403 may be implemented as an independent embodiment, step S3402+ step S3403 may be implemented as an independent embodiment, and step S3403 may be implemented as an independent embodiment, but is not limited to thereto.

In some embodiments, step S3402 and step S3403 are alternative, which may be omitted or replaced in different embodiments.

In some embodiments, step S3401 and step S3403 are alternative, which may be omitted or replaced in different embodiments.

In some embodiments, step S3401 and step S3402 are alternative, which may be omitted or replaced in different embodiments.

In some embodiments, please refer to other alternative implementations described before or after the description corresponding to FIG. 3D.

In embodiments of the disclosure, steps S3401 and S3402 may be combined with step S3201 of FIG. 3B, but are not limited thereto.

FIG. 3E is a flow chart illustrating an exemplary of a method for transmitting information according to embodiments of the disclosure. As illustrated in FIG. 3E, the method for transmitting the information related in embodiments of the disclosure may be applied to the communication system 100. The method may include the following.

At step S3501, for a delay dimension in the DD domain, one-dimensional continuous numbering is performed on REs occupied by the PDCCH; and for each antenna among N antennas of the network device, on the REs of the PDCCH and according to the sequence number of the REs, the antenna is multiplied by a first CDD phase rotation corresponding to each RE respectively.

In embodiments of the disclosure, the first CDD phase rotation is the CDD phase rotation in the delay dimension, and N is an integer greater than or equal to 2.

For alternative implementations of step S3501, please refer to the alternative implementations of step S2501 in FIG. 2E and other related parts of the embodiments involved in FIG. 2E, which is not repeated here.

At step S3502, for a Doppler dimension in the DD domain, the REs occupied by the PDCCH are continuously numbered, and for each antenna, on the REs of the PDCCH and according to the sequence number of the REs, the antenna is multiplied by a second CDD phase rotation corresponding to each RE respectively.

In embodiments of the disclosure, the second CDD phase rotation is the CDD phase rotation in the delay dimension.

For alternative implementations of step S3502, please refer to the alternative implementations of step S2502 in FIG. 2E and other related parts of the embodiments involved in FIG. 2E, which is not repeated here.

At step S3503, the PDCCH is sent to the terminal via the N antennas.

For example, the network device uses the N antennas processed at steps S2501 and S2502 to send the PDCCH to the terminal.

The method related in embodiments of the present disclosure may include at least one of steps S3501~S3503. For example, step S3501+ step S3503 may be implemented as an independent embodiment, step S3502+ step S3503 may be implemented as an independent embodiment, and step S3503 may be implemented as an independent embodiment, which is not limited to thereto.

In some embodiments, step S3502 and step S3503 are alternative, which may be omitted or replaced in different embodiments.

In some embodiments, step S3501 and step S3503 are alternative, which may be omitted or replaced in different embodiments.

In some embodiments, step S3501 and step S3502 are alternative, which may be omitted or replaced in different embodiments.

In some embodiments, please refer to other alternative implementations described before or after the description corresponding to FIG. 3E.

FIG. 3F is a flow chart illustrating an exemplary of a method for transmitting information according to embodiments of the disclosure. As illustrated in FIG. 3F, the method for transmitting the information related in embodiments of the disclosure may be applied to the communication system 100. The method may include the following.

At step S3601, a PDCCH is sent to a terminal based on spatial diversity in a DD domain.

In some embodiments, a network device sends configuration information of a first CORESET of the DD domain to the terminal, in which the first CORESET includes N_{CCE} CCEs, such that the terminal may obtain the PDCCH based on the configuration information of the first CORESET.

In some embodiments, the network device sends configuration information of a first CORESET of the DD domain to the terminal, in which the first CORESET includes N_{REG} REGs, such that the terminal may obtain the PDCCH based on the configuration information of the first CORESET.

In some embodiments, the network device sends the PDCCH to the terminal by employing a transmission diversity mode based on STBC.

In some embodiments, the network device sends the PDCCH to the terminal by employing a transmission diversity mode based on CDD.

FIG. 4A is a flow chart illustrating an exemplary of a method for transmitting information according to embodiments of the disclosure. As illustrated in FIG. 4A, the method for transmitting the information in embodiments of the disclosure may be applied to the terminal 102. The method includes the following.

At step S4101, configuration information of a first CORESET of the DD domain sent by a network device is received, in which the first CORESET includes N_{CCE} CCEs.

In embodiments of the disclosure, N_{CCE} is an integer.

For alternative implementations of step S4101, please refer to the alternative implementations of step S2102 in FIG. 2A and other related parts in the embodiments related to FIG. 2A, which is not described here again.

In some embodiments, the configuration information of the first CORESET includes: mapping the N_{CCE} CCEs to N_{DMRS} DMRS ports, where N_{DMRS} is an integer lower than or equal to N_{CCE}.

In some embodiments, mapping the N_{CCE} CCEs to the N_{DMRS} DMRS ports includes: multiple CCEs to which one PDCCH candidate on the first CORESET is mapped being associated with different DMRS ports.

In some embodiments, the REs corresponding to the N_{DMRS} DMRS ports are the REs in the first CORESET in the DD domain.

In some embodiments, REs corresponding to the N_{DMRS} DMRS ports are REs outside the first CORESET in the DD domain.

In some embodiments, the N_{DMRS} DMRS ports are dedicated to the first CORESET.

In some embodiments, the N_{DMRS} DMRS ports are used for the first CORESET and other CORESETs.

In some embodiments, the N_{DMRS} DMRS ports are used for the first CORESET and other signals.

In some embodiments, the N_{DMRS} DMRS ports are used for the first CORESET and other channels.

In some embodiments, the N_{DMRS} DMRS ports are used for the first CORESET, other channels, and other signals.

FIG. 4B is a flow chart illustrating an exemplary of a method for transmitting information according to embodiments of the disclosure. As illustrated in FIG. 4B, the method for transmitting the information in embodiments of the disclosure may be applied to the terminal 102. The method includes the following.

At step S4201, configuration information of a first CORESET of the DD domain sent by a network device is received, in which the first CORESET includes N_{REG} REGs.

In embodiments of the disclosure, N_{REG} is an integer greater than or equal to 2.

For alternative implementations of step S4201, please refer to the alternative implementations of step S2202 in FIG. 2B and other related parts in the embodiments related to FIG. 2B, which is not described here again.

In some embodiments, the configuration information of the first CORESET includes: mapping the N_{REG} REGs to N_{DMRS} DMRS ports, where N_{CCE}<N_{REG}, and N_{DMRS} < N_{REG}. The N_{CCE} is the number of CCEs included in the first CORESET.

In some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In some embodiments, the REs corresponding to the N_{DMRS} DMRS ports are the REs in the first CORESET in the DD domain.

In some embodiments, REs corresponding to the N_{DMRS} DMRS ports are REs outside the first CORESET in the DD domain.

In some embodiments, the N_{DMRS} DMRS ports are dedicated to the first CORESET and other signals.

For example, the N_{DMRS} DMRS ports may be shared by the first CORESET and other signals.

In some embodiments, the N_{DMRS} DMRS ports are used for the first CORESET and other channels.

For example, the N_{DMRS} DMRS ports may be shared by the first CORESET and other channels.

In some embodiments, the N_{DMRS} DMRS ports are used for the first CORESET, other channels and other signals.

For example, the N_{DMRS} DMRS ports are shared by the first CORESET, other channels and other signals.

FIG. 4C is a flow chart illustrating an exemplary of a method for transmitting information according to embodiments of the disclosure. As illustrated in FIG. 4C, the method for transmitting the information in embodiments of the disclosure may be applied to the terminal 102. The method includes the following.

At step S4301, the network device sends the PDCCH to the terminal by employing a transmission diversity mode based on STBC.

Encoding of the STBC is completed in the DD domain.

For alternative implementations of step S4301, please refer to the alternative implementations of step S2302 in FIG. 2C and other related parts in the embodiments related to FIG. 2C, which is not described here again.

In some embodiments, REs of multiple DD domains for executing the STBC in the transmission diversity mode based on the STBC are multiple adjacent REs with the same Doppler frequency shift.

For example, taking that there are two REs of the multiple DD domains for executing the STBC as an example, the REs of the multiple DD domains for executing the STBC in the transmission diversity mode based on the STBC by the network device are the multiple adjacent REs with the same Doppler frequency shift in the multiple DD domains.

In some embodiments, the REs of the multiple DD domains for executing the STBC in the transmission diversity mode based on the STBC are the multiple adjacent REs with the same delay.

As an example, taking that there are two REs in the multiple DD domains for executing the STBC as an example, REs of the multiple DD domain for executing the STBC in the transmission diversity mode based on the STBC by the network device are two adjacent REs with the same delay in the multiple DD domains.

In some embodiments, the REs of the multiple DD domains for executing the STBC in the transmission diversity mode based on the STBC are the multiple non-adjacent REs.

For example, in the transmission diversity mode based on the STBC, the REs in two DD domains used by the network device to execute the STBC are the multiple non-adjacent REs.

FIG. 4D is a flow chart illustrating an exemplary of a method for transmitting information according to embodiments of the disclosure. As illustrated in FIG. 4D, the method for transmitting the information in embodiments of the disclosure may be applied to the terminal 102. The method includes the following.

At step S4401, the PDCCH sent by the network device in the transmission diversity mode based on the CDD is received.

In embodiments of the disclosure, encoding of the CDD is completed on the DD domain.

For alternative implementations of step S4401, please refer to the alternative implementations of step S2402 in FIG. 2D and other related parts in the embodiments related to FIG. 2D, which is not described here again.

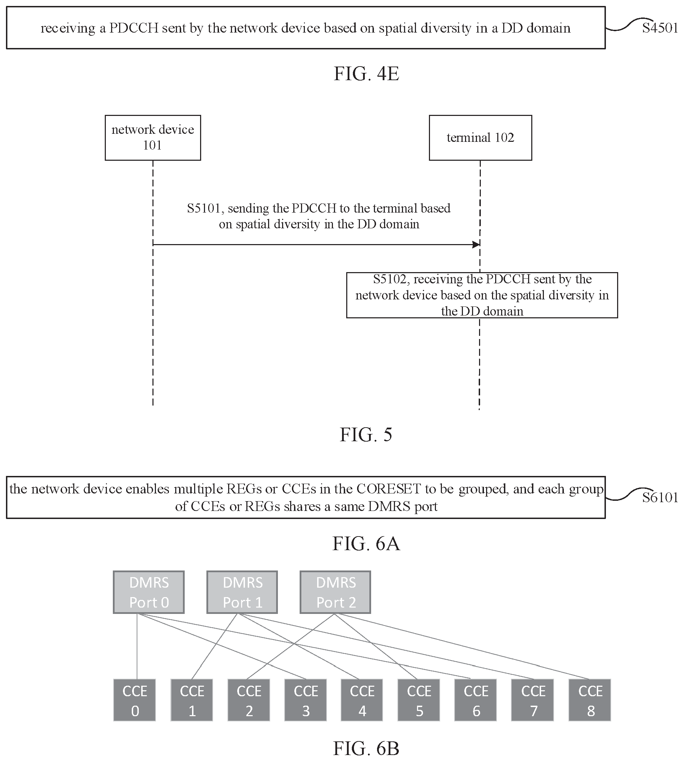

FIG. 4E is a flow chart illustrating an exemplary of a method for transmitting information according to embodiments of the disclosure. As illustrated in FIG. 4E, the method for transmitting the information in embodiments of the disclosure may be applied to the terminal 102. The method includes the following.

At step S4501, a PDCCH sent by the network device based on spatial diversity in a DD domain is received.

In some embodiments, the terminal receives configuration information of a first CORESET of the DD domain sent by the network device, in which the first CORESET includes N_{CCE} CCEs, such that the terminal may determine the PDCCH based on the configuration information of the first CORESET.

In some embodiments, the terminal receives configuration information of a first CORESET of the DD domain sent by the network device, in which the first CORESET includes N_{REG} REGs, such that the terminal may determine the PDCCH based on the configuration information of the first CORESET.

In some embodiments, the terminal receives the PDCCH sent by the network device in a transmission diversity mode based on STBC.

In some embodiments, the terminal receives the PDCCH sent by the network device in a transmission diversity mode based on CDD.

FIG. 5 is a schematic diagram illustrating an exemplary interaction of a method for transmitting information according to embodiments of the disclosure. As illustrated in FIG. 5, the method for transmitting the information related in embodiments of the disclosure may be applied to the communication system 100. The method may include, but is not limited to, the following.

At step S5101, the network device sends the PDCCH to the terminal based on spatial diversity in the DD domain.

For alternative implementations of step S5101, please refer to the alternative implementations of step S3101 in FIG. 3A, the alternative implementations of step S3201 in FIG. 3B, the alternative implementations of step S3301 in FIG. 3C, the alternative implementations of steps S3401~ to S3403 in FIG. 3E, the alternative implementations of steps S3501~ to S3503 in FIG. 3F, and other related parts in the embodiments related to FIG. 3A, FIG. 3B, FIG. 3C, FIG. 3D, FIG. 3E and FIG. 3F, which are not repeated here.

At step S5102, the terminal receives the PDCCH sent by the network device based on the spatial diversity in the DD domain.

For alternative implementations of step S5201, please refer to the alternative implementations of step S4101 in FIG. 4A, the alternative implementations of step S4201 in FIG. 4B, the alternative implementations of step S4301 in FIG. 4C, the alternative implementations of step S4401 in FIG. 4E, and other related parts in the embodiments related to FIG. 4A, FIG. 4B, FIG. 4C, FIG. 4D, and FIG. 4E, which are not repeated here.

FIG. 6A is a flow chart illustrating a method for transmitting information according to embodiments of the disclosure. As illustrated in FIG. 6A, the method includes the following.

At step S6101, the network device enables multiple REGs or CCEs in the CORESET to be grouped, and each group of CCEs or REGs shares the same DMRS port.

It should be noted that the number of DMRS ports may still be more than the number of antenna ports in the system, and respective DMRS ports may employ different Precoders to improve the effect of the spatial diversity. The DMRS port may be circularly mapped to the REG or CCE of the CORESET.

For example, it is assumed that the number of CCEs in the CORESET is N_{CCE} . Correspondingly, an index k of the CCE is 0, 1, ..., N_{CCE} - 1. It is assumed that the number of DMRS ports is N_{DMRS}. Correspondingly, an index p of the DMRS port is 0, 1, ..., N_{DMRS} - 1. Mapping the index k of the CCE to the index p of the DMRS port may be p = mod(k, N_{DMRS}), where mod () is a modulo function. In this way, when the candidate PDCCH includes multiple consecutive CCEs, additional spatial diversity may be obtained.

As an example, referring to FIG. 6B, FIG. 6B is a schematic diagram illustrating circularly mapping DMRS ports to CCEs according to embodiments of the disclosure.

For example, it is assumed that the number of REGs in the CORESET is N_{REG} . Correspondingly, an index k of the REG is 0, 1, ..., N_{CCE} - 1. It is assumed that the number of DMRS ports is N_{DMRS}. Correspondingly, an index p of the DMRS port is 0, 1, ..., N_{DMRS} - 1. Mapping the index k of the REG to the index p of the DMRS port may be p = mod(k, N_{DMRS}), where mod () is a modulo function. In this way, when one CCE includes multiple consecutive REGs, even if the candidate PDCCH merely includes one CCE, additional spatial diversity may be obtained.

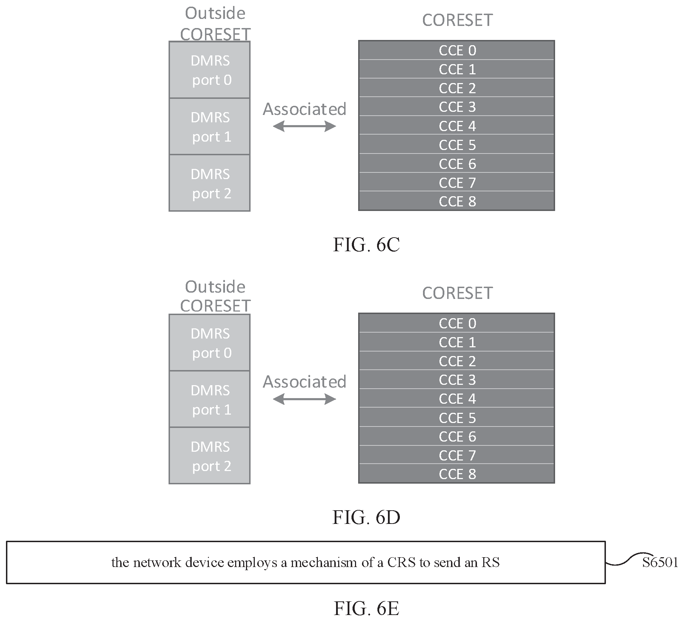

For example, REs in a DD domain of one CORESET may be divided into two parts, in which, one part is used to transmit the above N_{DMRS} DMRS ports, and the other part is divided to the above N_{REG} REGs or N_{CCE} CCEs. A detailed method of dividing the DMRS ports and CCE/REG in one CORESET is not limited in the disclosure. It should be noted that the N_{DMRS} DMRS ports may be dedicated to the CORESET. However, it is still possible for the network device to use these N_{DMRS} DMRS ports for other channels. As an example, referring to FIG. 6C, FIG. 6C is a schematic diagram illustrating dividing DMRS ports and CCEs in a CORESET according to embodiments of the disclosure. As illustrated in FIG. 6C, taking each rectangular frame being one RE an example, some of all REs in the DD domain of one CORESET may be used to transmit DMRS port 0, DMRS port 1 and DMRS port 2, and the other part may be divided into CCE0~CCE8, with 9 CCEs in total.

For example, all the REs in the DD domain of one CORESET may be used to divide to N_{REG} REGs or N_{CCE} CCEs. The N_{DMRS} DMRS ports associated to the N_{REG} REGs or N_{CCE} CCEs may occupy REs of other DD domains. With the method, in the configuration information of the CORESET, the configuration information of the N_{DMRS} DMRS ports associated with the N_{REG} REGs or N_{CCE} CCEs may be included.

It should be noted that the N_{DMRS} DMRS ports may be dedicated to the CORESET or shared with other CORESET, or the network device may also share the above N_{DMRS} DMRS ports with other channels/signals.

As an example, referring to FIG. 6D, FIG. 6D is a schematic diagram illustrating DMRS ports outside a CORESET according to embodiments of the disclosure.

FIG. 6E is a flow chart illustrating a method for transmitting information according to embodiments of the disclosure. As illustrated in FIG. 6E, the method includes the following.

At step S6501, the network device employs a mechanism of a CRS to send an RS.

For example, it is assumed that the number of antennas of the base station is N, only CRSs of N ports need to be sent in the DD domain, and transmission of PDCCH information may work based on the CRSs of the N ports. CRS ports may also be based on precoding.

As an example, in a case that N is relatively large, in order to further reduce the overhead of the CRS, only n=2 or 4 CRS ports may be sent, and mapped to N antennas for transmission through precoding. Correspondingly, the transmission of the PDCCH information may also work based on the N ports.

For example, a transmission diversity technology of the STBC may be employed for the transmission of the PDCCH information. The difference is that the related encoding is done in the DD domain. REs of two DD domains for executing the space-time codes may be two adjacent REs with the same Doppler frequency shift. Alternatively, the REs of the two DD domains for executing the space-time codes may be two adjacent REs with the same delay. Alternatively, the REs of the two DD for executing the space-time codes may be non-adjacent. In a case of 4 CRS ports, every 4 REs may be divided into 2 groups, and transmission may be performed on the above space-time codes on 2 REs in each group based on 2 CRS ports respectively. Generally, for a case of N CRS ports, the CRS ports may be divided into N/2 groups, and transmission be performed on the above space-like time codes on the two REs in each group based on two CRS ports respectively.

For example, the transmission of the PDCCH information may employ the transmission diversity technology of the CDD. The difference is that the related encoding is done in the DD domain. One-dimensional continuous numbering may be performed on all the REs occupied by the PDCCH. Next, on the REs of the PDCCH and according to the sequence number of the REs, each antenna may be multiplied by the CDD phase rotations corresponding to respective REs in turn. The CDD phase rotation may adjust the phase only in the delay dimension, or only in the Doppler dimension, or may also adjust the phase simultaneously in both the delay and Doppler dimensions. Alternatively, CDD processing may be performed in the delay dimension and Doppler dimension respectively. In detail, for each dimension, each antenna may multiply the CDD phase rotations corresponding to respective REs in turn in the dimension on the REs of the PDCCH and according to the sequence number of the REs.

In some embodiments, names of information and the like are not limited to names recorded in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be interchangeable.

In some embodiments, terms such as "up", "uplink", and "physical uplink" may be interchanged; terms such as "down", "downlink", and "physical downlink" may be interchanged; and terms such as "side", "sidelink", "side communication", "sidelink communication", "direct", "direct link", "direct communication", and "direct link communication" may be interchanged.

In some embodiments, the terms "acquiring", "obtaining", "receiving", "transmitting", "bidirectional transmission", and "sending and/or receiving" may be used interchangeably. These terms may be interpreted as receiving from other entities, obtaining from protocols, acquiring from a higher layer, deriving through internal processing, achieving autonomously, or other meanings.

In some embodiments, terms such as "sending", "emitting", "reporting", "issuing", "transmission", "bidirectional transmission", and "sending and/or receiving" may be used interchangeably.

In some embodiments, terms such as "specific (certain)" , "preset", "predefined", "set", "indicated", "a certain", "any", "first", etc., may be interchanged. "Specific A", "preset A", "predefined A", "set A", "indicated A", "a certain A", "any A", "first A" may be interpreted as A predefined in protocols, or A obtained through setting, configuration, or indication, and may also be interpreted as specific A, a certain A, any A, or first A, but are not limited thereto.

Embodiments of the disclosure also provide an apparatus for realizing any one of the above methods, such as, an apparatus that includes units or modules for implementing the steps executed by the network device in any of the above methods. For another example, another device is also provided, including units or modules for realizing the steps executed by the terminal in any of the above methods.

It should be understood that the division of units or modules in the above apparatuses is merely a division of logical functions. In an actual implementation, the units may be fully or partially integrated into a single physical entity or may be physically separated. In addition, the units or modules in the apparatus may be realized in the form of a processor calling software. For example, the apparatus includes a processor, and the processor is connected to a memory for storing instructions. The processor calls the instructions stored in the memory to realize any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be realized in the form of a hardware circuit. Some or all of the functions of the units or modules may be realized via a design of the hardware circuit. The above hardware circuit may be understood as one or more processors. For example, in an implementation, the above hardware circuit is an application-specific integrated circuit (ASIC), and some or all of the functions of the above units or modules are realized by designing the logical relationship of elements in the circuit. For another example, in another implementation, the above hardware circuit may be realized by a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully realized in the form of the processor calling software, or fully realized in the form of the hardware circuit, or partially realized in the form of the processor calling software and the remaining part realized in the form of the hardware circuit.

In embodiments of the disclosure, the processor is a circuit with a signal processing capability. In an implementation, the processor may be a circuit capable of reading and running instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit realized as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

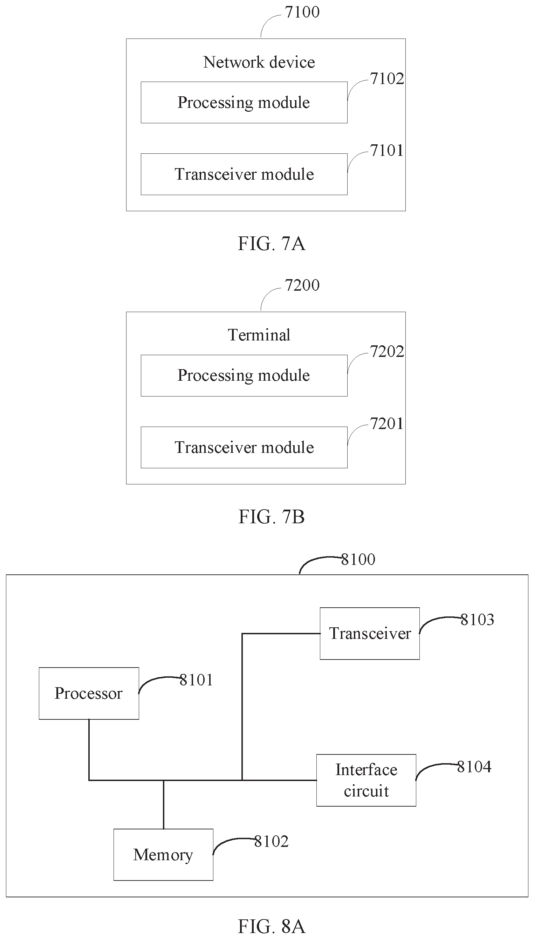

FIG. 7A is a block diagram illustrating a network device according to embodiments of the disclosure. As illustrated in FIG. 7A, the network device 7100 may include at least one of a transceiver module 7101, or a processing module 7102.

In some embodiments, the transceiver module 7101 is configured to send a PDCCH to a terminal based on spatial diversity in a DD domain.

In some embodiments, the transceiver module 7101 is specifically configured to send configuration information of a CORESET of the DD domain to the terminal, in which the first CORESET includes N_{CCE} CCEs, where N_{CCE} is an integer.

In some embodiments, the configuration information of the first CORESET includes: mapping the N_{CCE} CCEs to N_{DMRS} DMRS ports, where N_{DMRS} is an integer lower than or equal to N_{CCE}.

In combination with some embodiments of the first aspect, alternatively, mapping the N_{CCE} CCEs to the N_{DMRS} DMRS ports includes: multiple CCEs to which one PDCCH candidate on the first CORESET is mapped being associated with different DMRS ports.

In some embodiments, the transceiver module 7101 is configured to send configuration information of a first CORESET of the DD domain to the terminal, in which the first CORESET includes N_{REG} REGs, where N_{REG} is an integer greater than or equal to 2.

In some embodiments, the configuration information of the first CORESET includes: mapping the N_{REG} REGs to N_{DMRS} DMRS ports, where N_{CCE}<N_{REG}, and N_{DMRS} < N_{REG}.

In some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In some embodiments, REs corresponding to the N_{DMRS} DMRS ports are REs in the first CORESET in the DD domain.

In some embodiments, REs corresponding to the N_{DMRS} DMRS ports are REs outside the first CORESET in the DD domain.

In some embodiments, the N_{DMRS} DMRS ports are dedicated to the first CORESET; or the N_{DMRS} DMRS ports are used for the first CORESET and other CORESETs; or the N_{DMRS} DMRS ports are used for the first CORESET and other channels and/or other signals.

In some embodiments, the transceiver module 7101 is configured to send the PDCCH to the terminal by employing a transmission diversity mode based on STBC, in which encoding of the STBC is completed in the DD domain.

In some embodiments, REs of multiple DD domains for executing the STBC in the transmission diversity mode based on the STBC are multiple adjacent REs with the same Doppler frequency shift; or REs of multiple DD domains for executing the STBC in the transmission diversity mode based on the STBC are multiple adjacent RES with the same delay; or REs of multiple DD domains for executing the STBC in the transmission diversity mode based on the STBC are multiple non-adjacent REs.

In some embodiments, a number of antennas of the network device is N, and the processing module 7102 is configured to: divide each N REs into N/2 groups, in which STBC transmission is performed on two REs in each group respectively based on two CRS ports.

In some embodiments, the transceiver module 7101 is configured to send the PDCCH to the terminal by employing a transmission diversity mode based on CDD, in which encoding of the CDD is completed in the DD domain.

In some embodiments, the processing module 7102 is configured to perform one-dimensional continuous numbering on REs occupied by the PDCCH based on the transmission diversity mode of the CDD; for each antenna among N antennas of the network device, multiply, on the REs of the PDCCH and according to a sequence number of the REs, the antenna by a CDD phase rotation corresponding to each RE respectively, where N is an integer greater than or equal to 2; and the transceiver module 7101 is configured to send the PDCCH to the terminal via the N antennas.

In some embodiments, the processing module 7102 is configured to, for a delay dimension in the DD domain, continuously number REs occupied by the PDCCH, and for each antenna among N antennas of the network device, multiply, on the REs of the PDCCH and according to a sequence number of the REs, the antenna by a first CDD phase rotation corresponding to each RE respectively, in which the first CDD phase rotation is a CDD phase rotation in the delay dimension, and N is an integer greater than or equal to 2; for a Doppler dimension in the DD domain, continuously numbering REs occupied by the PDCCH, and for each antenna, multiply, on the REs of the PDCCH and according to the sequence numbers of the REs, the antenna by a second CDD phase rotation corresponding to each RE respectively, in which the second CDD phase rotation is a CDD phase rotation in the Doppler dimension; and send the PDCCH to the terminal via the N antennas.

FIG. 7B is a block diagram illustrating a terminal according to embodiments of the disclosure. As illustrated in FIG. 7B, the terminal 7200 may include at least one of a transceiver module 7201, or a processing module 7202.

In some embodiments, the transceiver module 7201 is configured to receive a PDCCH sent by a network device based on spatial diversity in a DD domain.

In some embodiments, the transceiver module 7201 is configured to receive configuration information of a first CORESET of the DD domain sent by the network device, in which the first CORESET includes N_{CCE} CCEs, where N_{CCE} is an integer.

In some embodiments, the configuration information of the first CORESET includes: mapping the N_{CCE} CCEs to N_{DMRS} DMRS ports, where N_{DMRS} is an integer lower than or equal to N_{CCE}.

In some embodiments, multiple CCEs to which one PDCCH candidate on the first CORESET is mapped are associated with different DMRS ports.

In some embodiments, the transceiver module 7201 is configured to receive configuration information of a first CORESET of the DD domain sent by the network device, in which the first CORESET includes N_{REG} REGs, where N_{REG} is an integer greater than or equal to 2.

In some embodiments, the configuration information of the first CORESET includes: mapping the N_{REG} REGs to N_{DMRS} DMRS ports, where N_{CCE}<N_{REG}, and N_{DMRS} < N_{REG}.

In some embodiments, mapping the N_{REG} REGs to the N_{DMRS} DMRS ports includes: mapping one PDCCH candidate on the first CORESET to one or more CCEs, in which multiple REGs to which one CCE is mapped are associated with different DMRS ports.

In some embodiments, REs corresponding to the N_{DMRS} DMRS ports are REs in the first CORESET in the DD domain.

In some embodiments, REs corresponding to the N_{DMRS} DMRS ports are REs outside the first CORESET in the DD domain.

In some embodiments, the N_{DMRS} DMRS ports are dedicated to the first CORESET; or the N_{DMRS} DMRS ports are used for the first CORESET and other CORESETs; or the N_{DMRS} DMRS ports are used for the first CORESET and other channels and/or other signals.

In some embodiments, the transceiver module 7201 is configured to receive the PDCCH from the network device by employing a transmission diversity mode based on STBC, in which encoding of the STBC is completed in the DD domain.

In some embodiments, REs of multiple DD domains for executing the STBC in the transmission diversity mode based on the STBC are multiple adjacent REs with the same Doppler frequency shift; or REs of multiple DD domains for executing the STBC in the transmission diversity mode based on the STBC are multiple adjacent RES with the same delay; or REs of multiple DD domains for executing the STBC in the transmission diversity mode based on the STBC are multiple non-adjacent REs.

In some embodiments, the transceiver module 7201 is configured to receive the PDCCH from the network device by employing a transmission diversity mode based on CDD, in which encoding of the CDD is completed in the DD domain.

In some embodiments, the transceiver module may include a sending module and/or a receiving module. The sending module and/or the receiving module may be separate or integrated together. Alternatively, the transceiver module may be replaced with the transceiver.

In some embodiments, the processing module may be one module or may include multiple sub-modules. Alternatively, multiple sub-modules respectively perform all or some of the steps needed by the processing module. Alternatively, the processing module may be interchanged with the processor.

FIG. 8A is a block diagram illustrating a communication device according to embodiments of the disclosure. The communication device 8100 may be a network device (such as, an access network device or a core network device, etc.), or a terminal (such as, a user equipment, etc.), or a chip, a chip system, or a processor, etc. that supports the network device to realize any one of the above methods, or a chip, a chip system, or a processor, etc. that supports the terminal to realize any one of the above methods. The communication device 8100 may be configured to realize the method in the above method embodiments. For details, please refer to the descriptions in the above method embodiments.

As illustrated in FIG. 8A, the communication device 8100 includes one or more processors 8101. The processor 8101 may be a general-purpose processor or a dedicated processor, such as, a baseband processor and a central processor. The baseband processor is configured to process communication protocols and communication data. The central processor is configured to control the communication device (such as, a base station, a baseband chip, a terminal, a terminal chip, a DU, or a CU) to execute programs, and process data of the programs. Alternatively, the communication device 8100 is configured to execute any of the above methods. Alternatively, the one or more processors 8101 are configured to call instructions to cause the communication device 8100 to realize any one of the above communication methods.

In some embodiments, the communication device 8100 also includes one or more transceivers 8102. In a case that the communication device 8100 includes one or more transceivers 8102, one of communication steps (such as steps S2101, S2102, S2201, S2202, S2301, S2302, S2403, S2404, S2503 and S2504, but not limited thereto) such as sending and/or receiving in the above methods are executed by transceiver 8102, and other steps (such as steps S2401, S2402, S2501, and S2502, but not limited thereto) are executed by the processor 8101. In alternative embodiments, the transceiver may include a receiver and a transmitter. The receiver and the transmitter may be separate or integrated. Alternatively, terms such as transceiver, transceiver unit, transceiver machine, transceiver circuit, interface circuit, interface etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 8100 also includes one or more memories 8103 for storing data. Alternatively, all or some of the memories 8103 may also be located outside the communication device 8100. Alternatively, the communication device 8100 also includes one or more interface circuits 8104. The interface circuit 8104 is connected to the memory 8102 and may be used to receive data from the memory 8102 or other devices, and send the data to the memory 8102 or other devices. For example, the interface circuit 8104 may read the data stored in the memory 8102 and send the data to the processor 8101.

The communication device 8100 in the description of the above embodiments may be a network device or a terminal, but the scope of the communication device 8100 described in the disclosure is not limited herein. The structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

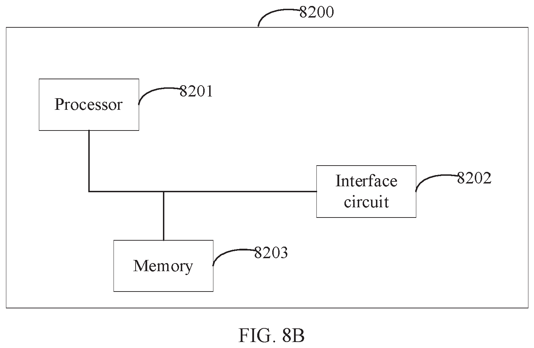

FIG. 8B is a block diagram illustrating a chip according to an exemplary embodiment. For a case that the communication device 8100 may be a chip or a chip system, please refer to the block diagram of the chip 8200 illustrated in FIG. 8B, which is not limited herein.

The chip 8200 includes one or more processors 8201, and the processor 8201 is configured to execute any one of the above methods.

In some embodiments, the chip 8200 also includes one or more interface circuits 8202. Alternatively, terms such as interface circuit, interface, transceiver pin, etc. may be used interchangeably. In some embodiments, the chip 8200 also includes one or more memories 8203 for storing data. Alternatively, all or some of the memories 8203 may be located outside the chip 8200. Alternatively, the interface circuit 8202 is connected to a memory 8203 and may be used to receive data from the memory 8203 or other devices, and send data to the memory 8203 or other devices. For example, the interface circuit 8202 may read data stored in the memory 8203 and send the data to the processor 8201.

In some embodiments, the interface circuit 8202 performs at least one of communication steps (such as, step S3101, step S3201, step S3301, step S3403 and step S3503, but not limited thereto; or step S4101, step S4201, step S4301, step S4403 and step S4501, but not limited thereto) such as transmission and/or reception in the above method. The interface circuit 8202 performs communication steps such as transmission and/or reception in the above method, which means that the interface circuit 8202 performs data interaction between the processor 8201, the chip 8200, the memory 8203 or the transceiver devices. In some embodiments, the processor 8201 performs at least one of other steps (such as, step S3401, step S3402, step S2501 and step S3502, but not limited thereto)

The disclosure also provides a storage medium for storing instructions. When the instructions run on the communication device 8100, the communication device 8100 is caused to execute any one of the above methods. Alternatively, the storage medium is an electronic storage medium. Alternatively, the storage medium is a computer-readable storage medium, but may also be a storage medium readable by other devices. Alternatively, the storage medium may be a non-transitory storage medium, but may also be a transitory storage medium, which is not limited thereto.

The disclosure also provides a program product. When the program product is executed by the communication device 8100, the communication device 8100 is caused to execute any one of the above methods. Alternatively, the program product is a computer program product.

The disclosure also provides a computer program. When the computer program runs on a computer, the computer is caused to execute any one of the above methods.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or some of processes or functions described in embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the detailed working processes of the systems, apparatuses, and units described above reference can be made to the corresponding processes in the preceding method embodiments, and will not be repeated herein.

The above are only detailed implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for transmitting information, applied to an orthogonal time frequency space (OTFS) communication system, comprising:
sending, by a network device, a physical downlink control channel (PDCCH) to a terminal based on spatial diversity in a delay-Doppler (DD) domain.

2. The method of claim 1, wherein sending, by the network device, the PDCCH to the terminal based on the spatial diversity in the DD domain comprises:
sending configuration information of a first control resource set (CORESET) of the DD domain to the terminal, wherein the first CORESET comprises N_{CCE} control channel elements (CCEs), where N_{CCE} is an integer.

3. The method of claim 2, wherein the configuration information of the first CORESET comprises: mapping the N_{CCE} CCEs to N_{DMRS} demodulation reference signal (DMRS) ports, wherein N_{DMRS} is an integer lower than or equal to N_{CCE}.

4. The method of claim 3, wherein mapping the N_{CCE} CCEs to the N_{DMRS} DMRS ports comprises:
a plurality of CCEs to which one PDCCH candidate on the first CORESET is mapped being associated with different DMRS ports.

5. The method of claim 1, wherein sending, by the network device, the PDCCH to the terminal based on the spatial diversity in the DD domain comprises:
sending configuration information of a first CORESET of the DD domain to the terminal, wherein the first CORESET comprises N_{REG} resource element groups (REGs), wherein N_{REG} is an integer greater than or equal to 2.

6. The method of claim 5, wherein the configuration information of the first CORESET comprises: mapping the N_{REG} REGs to N_{DMRS} DMRS ports, whereinN_{CCE}<N_{REG}, and N_{DMRS} < N_{REG}.

7. The method of claim 6, wherein mapping the N_{REG} REGs to the N_{DMRS} DMRS ports comprises:
mapping one PDCCH candidate on the first CORESET to one or more CCEs, wherein a plurality of REGs to which one CCE is mapped are associated with different DMRS ports.

8. The method of any one of claims 3 to 6, wherein resource elements (REs) corresponding to the N_{DMRS} DMRS ports are REs in the first CORESET in the DD domain.

9. The method of any one of claims 3 to 6, wherein REs corresponding to the N_{DMRS} DMRS ports are REs outside the first CORESET in the DD domain.

10. The method of any one of claims 3 to 8, wherein
the N_{DMRS} DMRS ports are dedicated to the first CORESET; or
the N_{DMRS} DMRS ports are used for the first CORESET and other CORESETs; or
the N_{DMRS} DMRS ports are used for the first CORESET and other channels and/or other signals.

11. The method of claim 1, wherein sending, by the network device, the PDCCH to the terminal based on the spatial diversity in the DD domain comprises:
sending the PDCCH to the terminal by employing a transmission diversity mode based on space time block code (STBC), wherein encoding of the STBC is completed in the DD domain.

12. The method of claim 11, wherein
REs of a plurality of DD domains for executing the STBC in the transmission diversity mode based on the STBC are a plurality of adjacent REs with the same Doppler frequency shift; or
REs of a plurality of DD domains for executing the STBC in the transmission diversity mode based on the STBC are a plurality of adjacent RES with the same delay; or
REs of a plurality of DD domains for executing the STBC in the transmission diversity mode based on the STBC are a plurality of non-adjacent REs.

13. The method of claim 11, wherein a number of antennas of the network device is N, and the method further comprises:
dividing each N REs into N/2 groups, wherein STBC transmission is performed on two REs in each group respectively based on two common reference signal (CRS) ports.

14. The method of claim 1, wherein sending, by the network device, the PDCCH to the terminal based on the spatial diversity in the DD domain comprises:
sending the PDCCH to the terminal by employing a transmission diversity mode based on cyclic delay diversity (CDD), wherein encoding of the CDD is completed in the DD domain.

15. The method of claim 14, wherein sending the PDCCH to the terminal by employing the transmission diversity mode based on the CDD comprises:
performing one-dimensional continuous numbering on REs occupied by the PDCCH based on the transmission diversity mode of the CDD; for each antenna among N antennas of the network device;
multiplying, on the REs of the PDCCH and according to a sequence number of the REs, the antenna by a CDD phase rotation corresponding to each RE respectively, wherein N is an integer greater than or equal to 2; and
sending the PDCCH to the terminal via the N antennas.

16. The method of claim 14, wherein sending the PDCCH to the terminal by employing the transmission diversity mode based on the CDD comprises:
for a delay dimension in the DD domain, continuously numbering REs occupied by the PDCCH, and for each antenna among N antennas of the network device, multiplying, on the REs of the PDCCH and according to a sequence number of the REs, the antenna by a first CDD phase rotation corresponding to each RE respectively, wherein the first CDD phase rotation is a CDD phase rotation in the delay dimension, and N is an integer greater than or equal to 2;
for a Doppler dimension in the DD domain, continuously numbering REs occupied by the PDCCH, and for each antenna, multiplying, on the REs of the PDCCH and according to the sequence numbers of the REs, the antenna by a second CDD phase rotation corresponding to each RE respectively, wherein the second CDD phase rotation is a CDD phase rotation in the Doppler dimension; and
sending the PDCCH to the terminal via the N antennas.

17. A method for transmitting information, applied to an orthogonal time frequency space (OTFS) communication system, comprising:
receiving, by a terminal, a physical downlink control channel (PDCCH) sent by a network device based on spatial diversity in a delay-Doppler (DD) domain.

18. The method of claim 17, wherein receiving, by the terminal, the PDCCH sent by the network device based on the spatial diversity in the DD domain comprises:
receiving configuration information of a first control resource set (CORESET) of the DD domain sent by the network device, wherein the first CORESET comprises N_{CCE} control channel elements (CCEs), where N_{CCE} is an integer.

19. The method of claim 18, wherein the configuration information of the first CORESET comprises: mapping the N_{CCE} CCEs to N_{DMRS} demodulation reference signal (DMRS) ports, wherein N_{DMRS} is an integer lower than or equal to N_{CCE}.

20. The method of claim 19, wherein mapping the N_{CCE} CCEs to the N_{DMRS} DMRS ports comprises:
a plurality of CCEs to which one PDCCH candidate on the first CORESET is mapped being associated with different DMRS ports.

21. The method of claim 17, wherein receiving, by the terminal, the PDCCH sent by the network device based on the spatial diversity in the DD domain comprises:
receiving configuration information of a first CORESET of the DD domain sent by the network device, wherein the first CORESET comprises N_{REG} resource element groups (REGs), wherein N_{REG} is an integer greater than or equal to 2.

22. The method of claim 21, wherein the configuration information of the first CORESET comprises: mapping the N_{REG} REGs to N_{DMRS} DMRS ports, wherein N_{CCE}<N_{REG}, and N_{DMRS} < N_{REG}.

23. The method of claim 22, wherein mapping the N_{REG} REGs to the N_{DMRS} DMRS ports comprises:
mapping one PDCCH candidate on the first CORESET to one or more CCEs, wherein a plurality of REGs to which one CCE is mapped are associated with different DMRS ports.

24. The method of any one of claims 19 to 23, wherein resource elements (REs) corresponding to the N_{DMRS} DMRS ports are REs in the first CORESET in the DD domain.

25. The method of any one of claims 19 to 23, wherein REs corresponding to the N_{DMRS} DMRS ports are REs outside the first CORESET in the DD domain.

26. The method of any one of claims 19 to 23, wherein
the N_{DMRS} DMRS ports are dedicated to the first CORESET; or
the N_{DMRS} DMRS ports are used for the first CORESET and other CORESETs; or
the N_{DMRS} DMRS ports are used for the first CORESET and other channels and/or other signals.

27. The method of claim 17, wherein receiving, by the terminal, the PDCCH sent by the network device based on the spatial diversity in the DD domain comprises:
receiving the PDCCH from the network device by employing a transmission diversity mode based on space time block code (STBC), wherein encoding of the STBC is completed in the DD domain.

28. The method of claim 27, wherein
REs of a plurality of DD domains for executing the STBC in the transmission diversity mode based on the STBC are a plurality of adjacent REs with the same Doppler frequency shift; or
REs of a plurality of DD domains for executing the STBC in the transmission diversity mode based on the STBC are a plurality of adjacent RES with the same delay; or
REs of a plurality of DD domains for executing the STBC in the transmission diversity mode based on the STBC are a plurality of non-adjacent REs.

29. The method of claim 17, wherein receiving, by the terminal, the PDCCH sent by the network device based on the spatial diversity in the DD domain comprises:
receiving the PDCCH from the network device by employing a transmission diversity mode based on cyclic delay diversity (CDD), wherein encoding of the CDD is completed in the DD domain.

30. A network device, comprising:
a transceiver module, configured to send a physical downlink control channel (PDCCH) to a terminal based on spatial diversity in a delay-Doppler (DD) domain.

31. A terminal, comprising:
a transceiver module, configured to receive a physical downlink control channel (PDCCH) sent by a network device based on spatial diversity in a delay-Doppler (DD) domain.

32. A communication system comprising:
a network device, configured to realize the method for transmitting information of any one of claims 1 to 16; and
a terminal, configured to realize the method for transmitting information of any one of claims 17 to 29.

33. A storage medium for storing instructions, wherein when the instructions are run on a communication device, the communication device is caused to execute the method for transmitting information of any one of claims 1 to 16 and claims 17 to 29.
